(19) Europäisches Patentamt / European Patent Office / Office européen des brevets

(11) EP 3 541 614 B1

(12) EUROPÄISCHE PATENTSCHRIFT

(45) Veröffentlichungstag und Bekanntmachung des Hinweises auf die Patenterteilung:
**07.01.2026 Patentblatt 2026/02**

(21) Anmeldenummer: **17808834.0**

(22) Anmeldetag: **21.11.2017**

(51) Internationale Patentklassifikation (IPC):
***B29D 99/00*** *(2010.01)* ***B31D 3/02*** *(2006.01)*

(52) Gemeinsame Patentklassifikation (CPC):
**B29D 99/0089; B31D 3/005; B31D 3/0223**

(86) Internationale Anmeldenummer:
**PCT/EP2017/079957**

(87) Internationale Veröffentlichungsnummer:
**WO 2018/091745 (24.05.2018 Gazette 2018/21)**

# (54) KERNKÖRPER AUS EINEM KUNSTSTOFFVERBUND UND VERFAHREN ZU SEINER HERSTELLUNG

CORE MEMBER MADE OF A COMPOSITE PLASTIC MATERIAL, AND METHOD FOR THE PRODUCTION THEREOF

ÂME EN COMPOSITE PLASTIQUE ET SON PROCÉDÉ DE FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.11.2016 LU 93317**

(43) Veröffentlichungstag der Anmeldung:
**25.09.2019 Patentblatt 2019/39**

(73) Patentinhaber: **Euro-Composites S.A.**
**6468 Echternach (LU)**

(72) Erfinder:
- **ALTER, Rolf Mathias**
  **6419 Echternach (LU)**
- **WINTGENS, Willy**
  **9907 Troisvierges (LU)**
- **KAMINSKI, Darius**
  **54668 Ferschweiler (DE)**

(74) Vertreter: **Meissner Bolte Partnerschaft mbB**
**Patentanwälte Rechtsanwälte**
**Postfach 86 06 24**
**81633 München (DE)**

(56) Entgegenhaltungen:
**EP-A1- 0 739 707**
**WO-A1-91/02646**
**JP-A- H07 156 318**
**US-A- 5 030 305**
**US-A1- 2008 145 599**

- **GEORGE TOCHUKWU: "Carbon Fiber Composite Cellular Structures", 1 May 2014 (2014-05-01), XP055390290, Retrieved from the Internet <URL:http://www.virginia.edu/ms/research/wadley/Thesis/TGeorgePhD.pdf> [retrieved on 20170712]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Processed by Luminess, 75001 PARIS (FR)

## Beschreibung

Die vorliegende Erfindung betrifft einen Kernkörper mit verbesserten mechanischen Eigenschaften. Die vorliegende Erfindung betrifft ferner ein Verfahren zur Herstellung eines Kernkörpers aus einem offenporigen Träger sowie einen gemäß diesem Verfahren hergestellten Kernkörper.

Kernkörper aus Kunststoffverbund spielen im modernen Leichtbau eine große Rolle. Solche Materialien erlauben eine Minimierung des eingesetzten Materials und führen somit zur Verringerung von Gewicht und Materialkosten. Dies wird dadurch ermöglicht, dass solche Materialien eine hohe mechanische Steifigkeit bei geringem Gewicht erlauben. Diese Eigenschaften machen die Materialien insbesondere zum Einsatz in der Luft- und Raumfahrtindustrie interessant. Weitere Anwendungsgebiete sind der Automobil- und Schiffsbau. In Bezug auf die grundsätzlichen Eigenschaften von Kernkörpern wird auf "Honeycomb Technology Materials, design, manufacturing, applications and testing", Tom Bitzer, published by Chapman & Hall, ISBN 0 412 540509 verwiesen.

Die US 5030305 A offenbart Verfahren zur Herstellung thermoplastischer Strukturen, wobei die Struktur ein faserverstärktes thermoplastisches Harz umfasst.

Die JP H07 156318 A offenbart eine Verfahren zur Herstellung eines Kernkörpers aus Aramiden.

George Tochukwu offenbart in "Carbon Fiber Composite Cellular Structures", (20140501), Kernkörper, umfassend Carbonfasermaterialien.

Die WO 91/02646 A1 beschreibt filmbasierte Verbundstrukturen.

Die EP 0 739 707 A1 offenbart Wabenstrukturen, umfassend Aramidfasern.

Die US 2008/145599 A1 offenbart Verfahren zur Herstellung von wabenförmigen Kernkörpern.

Aufgrund der bevorzugten Verwendung solcher Materialien im Leichtbau ist das Raumgewicht des Materials von entscheidender Bedeutung. Gleichzeitig sollen besonders gute mechanische Eigenschaften erzielt werden. Bisher verfügbare Materialien leiden unter dem Nachteil, dass besonders vorteilhafte mechanische Eigenschaften, insbesondere in Bezug auf das Verhältnis von Kompressionsmodul zu Raumgewicht, sich nur innerhalb gewisser Grenzen mit niedrigen Raumgewichten kombinieren lassen.

Eine Verbesserung der mechanischen Eigenschaften kann oft durch eine Verringerung der Zellgröße der Materialien erzielt werden. Allerdings führt eine Verringerung der Zellgröße in aller Regel auch zu einer Erhöhung des Raumgewichtes. Somit leiden bisher verfügbare Materialien unter dem Nachteil, dass sich ein geringes Raumgewicht nur innerhalb gewisser Grenzen mit einer geringen Zellgröße kombinieren lässt.

Der vorliegenden Erfindung lag die Aufgabe zugrunde, Kernkörper aus einem Kunststoffverbund bereitzustellen, die in Bezug auf die oben genannten Eigenschaften verbessert sind. Unter dem hier angeführten Begriff Kunstoffverbund sind neben den rein synthetisch hergestellten Kunstoffen (wie Harze, Kleber und ähnliche) ebenfalls Kunststoffe nicht auszuschliessen, die aus natürlichen Ressourcen basieren, u.a. als Bio-Harze auf dem Markt geführt werden wie zum Beispiel das Cashew-Schalenöl aus welchem technische Harze ähnlich wie ein Phenolharz hergestellt werden können, oder auch furan- oder - furfural-haltige Harze, die aus naturbasierenden Produkten wie Zucker-Kohlehydraten gewonnen werden können. Letztere Beispiele sind exemplarisch angeführt und dienen nicht dazu den hier beanspruchten Schutzgegenstand einzuschränken sondern neben den rein synthetischem Harzen auch auf alle biologisch- und naturbasierenden und auch aus Naturprodukten synthetisch abgeleiteten Harze zu erweitern.

Diese Aufgabe wird erfindungsgemäß gelöst durch einen Kernkörper, wobei die folgende Bedingung a) erfüllt wird:

> a) er weist ein Raumgewicht von ≤ etwa 48, insbesondere ≤ etwa 40, stärker bevorzugt ≤ etwa 32 $kg/m^3$ und ganz besonders bevorzugt ≤ 26 kg/m auf;

und wobei die Bedingung b erfüllt wird:

b) er weist ein Verhältnis von Kompressionsmodul zu Raumgewicht ≥ etwa $4{,}5\ \frac{\mathrm{MPa}}{\mathrm{kg/m^3}}$, bevorzugt $\geq 5{,}5\ \frac{\mathrm{MPa}}{\mathrm{kg/m^3}}$ und ganz besonders bevorzugt $\geq 5{,}8\ \frac{\mathrm{MPa}}{\mathrm{kg/m^3}}$ auf;

Die erfindungsgemäßen Kernkörper zeichnen sich gegenüber den bisher bekannten Kernkörpern durch eine einzigartige Kombination von Eigenschaften aus. Insbesondere weisen die erfindungsgemäßen Kernkörper im Vergleich zu den aus dem Stand der Technik bekannten Kernkörpern folgende Eigenschaften auf:

- Sie weisen ein weit niedrigeres Raumgewicht bei gleichem Verhältnis von Kompressionsmodul zu Raumgewicht auf.
- Sie weisen ein niedrigeres Raumgewicht bei höherem Verhältnis von Kompressionsmodul zu Raumgewicht auf.
- Sie weisen das gleiche Raumgewicht bei wesentlich höherem Verhältnis von Kompressionsmodul zu Raumgewicht auf.

- Sie weisen ein weit niedrigeres Raumgewicht bei gleicher Zellgröße auf.
- Sie weisen ein niedrigeres Raumgewicht bei kleinerer Zellgröße auf.
- Sie weisen das gleiche Raumgewicht bei wesentlich kleineren Zellgrößen auf.

In einer bevorzugten Ausführungsform ist der erfindungsgemäße Kernkörper so ausgestaltet, dass der Kernkörper eine Zellgröße von ≤ etwa 9,6 mm, insbesondere ≤ 6,4 mm, bevorzugt ≤ 4,8 mm, besonders bevorzugt ≤ 3,2 mm und ganz besonders bevorzugt ≤ 1,6mm aufweist.

In einer bevorzugten Ausführungsform ist der erfindungsgemäße Kernkörper so ausgestaltet, dass der Kernkörper ein Wabenkörper ist, wobei der Wabenkörper eine polygonale, vorzugsweise eine hexagonale, rechtwinklig oder kreisförmige Zellgeometrie aufweist.

Es hat sich als vorteilhaft erwiesen, dass der erfindungsgemäße Kernkörper so ausgestaltet ist, dass der Kernkörper aus Glas- (E-,S2-), Kohle-, Kevlar-, Basaltfaser, bevorzugt einer Quarzglasfaser, oder aus Hybridkonstruktionen dieser genannten Fasern hergestellt ist.

In einer bevorzugten Ausführungsform ist der erfindungsgemäße Kernkörper so ausgestaltet, dass er aus einem Kunststoff-Verbund ist.

Unter Kernkörper ist im Sinne der vorliegenden Erfindung ein Körper zu verstehen, der im Verbund mit Deckschichten im Kern eines Verbundbauteils eingesetzt wird, vorwiegend mit dem Ziel bei geringerem Gewicht die Steifigkeit dieses Bauteils oder auch andere mechanische oder physikalische (z.B. dielektrische) Eigenschaften zu verbessern.

Zu den wohl häufigsten eingesetzten Kernkörpern im Verbundbereich gehören Schäume (offen -oder geschlossenporig), Wabenkerne, Wellpappe oder Wellbleche und daraus abgeleitete Zick-Zack-Geometrien (z.B. Faltwabe) und auch aus der Natur direktverfügbare Materialien wie das Balsaholz.

In einer bevorzugten Ausführungsform handelt es sich bei dem erfindungsgemäßen Kernkörper um einen Wabenkörper. Unter einem Wabenkörper ist im Sinne der vorliegenden Erfindung ein Körper zu verstehen, der eine zellenförmige Struktur aufweist dessen Zellgeometrieeiner einer Honigwabe gleicht. Daher wurde diese Bezeichnung semantisch hiervon abgeleitet. Die Zellgeometrie eines Wabenkörpers im Sinne der hier vorliegenden Erfindung beschränkt sich aber nicht alleine auf hexagonale Zellstrukturen.

In einer besonders bevorzugten Ausführungsform ist der erfindungsgemäße Kernkörper, insbesondere in Form eines Wabenkörpers, so ausgestaltet, dass er ein Kunststoff-Verbund mit einem offenporigen Träger ist. Im Sinne der vorliegenden Erfindung ist der Begriff offenporiger Träger so zu verstehen dass, dieser Körper luftdurchlässig ist oder auch durchlässig sein kann für jegliches gasförmige oder auch flüssigförmige Medium.

In einer besonders bevorzugten Ausführungsform kann der Träger eine Luftdurchlässigkeit nach der Messmethode nach DIN EN ISO 9237 (1995), die Luftströmung in L/min misst, die bei einem Differenzdruck von 200Pa durch eine Fläche von 20 $cm^2$ durch den Träger fließt. Die Luftdurchlässigkeit nach der hier vorliegenden Erfindung liegt bei oder über 10L/$dm^2$/Min und besonders bevorzugt weit über 716 L/$dm^2$/Sek, die derzeitig die Messgrenze der hier beschrieben Messmethode darstellt.

In einer besonders bevorzugten Ausführungsform ist der erfindungsgemäße Kernkörper so ausgestaltet, dass der Kernkörper ein Quarzglasfaser-Kunststoff-Verbund ist.

In Bezug auf den Kunststoffanteil des Kunststoffverbundes unterliegen die erfindungsgemäßen Kernkörper keinen prinzipiellen Einschränkungen. Es hat sich jedoch als besonders vorteilhaft erwiesen, wenn die erfindungsgemäßen Kernkörper so ausgestaltet sind, dass der Kernkörper aus einem Kunststoff hergestellt ist, der nur aus einer duroplastischen oder auch thermoplastischen Matrix besteht, bevorzugt aus der Familie der Cyanatester oder Polyimide ggfs. auch Phenole, Epoxide, Benzoxazine, BMI, Polyetherimide (PEI), Polyetherketone (PEK, PEEK, PAEK, PEKK) Polythioether (PPS), Polyether (PP, PPO), oder auch aus gängigen Thermoplasten wie PE, PP PET, PA, PC PMMA oder dgl.

Besonders gute Ergebnisse werden erzielt, wenn der erfindungsgemäße Kernkörper so ausgestaltet ist, dass der Kernkörper ein Verbund ist bestehend aus Fasern und/oder einem andern Träger-oder Füllmaterialen und einem Kunststoff, der eine duroplastische oder auch thermoplastische Matrix umfasst, bevorzugt aus der Familie der Cyanatester oder Polyimide ggfs auch Phenole, Epoxide, Benzoxazine, BMI, Polyetherimide (PEI), Polyetherketone (PEK, PEEK, PAEK, PEKK) Polythioether (PPS), Polyether (PP, PPO) ), oder auch aus gängigen Thermoplasten wie PE, PP PET, PA, PC PMMA oder dgl. In einer besonders bevorzugten Ausführungsform ist der Kernkörper ein Verbund bestehend aus Fasern und/oder anderen Träger- oder Füllmaterialien und einem Kunststoff, der ein Cyanatester ist.

Besonders gute Ergebnisse werden erzielt, wenn der erfindungsgemäße Kernkörper so ausgestaltet ist, dass der Kernkörper ein Quarzglasfaser-Cyanatester-Verbund ist.

In einer besonders bevorzugten Ausführungsform ist der erfindungsgemäße Kernkörper aus einem Gewebe und/oder einem "Vlies"-artigen Gebilde hergestellt. Bei der Herstellung der erfindungsgemäßen Kernkörper erfolgt eine Beschichtung oder Imprägnierung des Gewebes durch den Kunststoff. Besonders gute Ergebnisse werden erzielt, wenn der erfindungsgemäße Kernkörper so ausgestaltet ist, dass das Gewebe nicht vollständig imprägniert und/oder beschichtet ist und eine Luftdurchlässigkeit über die offenporigen Zellwände zwischen den Zellen gewährleistet. Dies ist insbesondere vorteilhaft bei Anwendung des Materials in den Bereichen der Luft- und Raumfahrt. Hintergrund ist, dass eine Luftdurchlässigkeit der offenporigen Zellwände dazu führt, dass ein Druckausgleich mit der Umgebung möglich wird. Dieser Druckausgleich ermöglicht einen problemlosen Einsatz des Materials in einer Umgebung, in der stark verminderter Druck herrscht, was im Bereich der Luft- und Raumfahrt **häufig** der Fall ist. Bei bisher in diesem Bereich verwendeten Kernkörpern war es in der Regel notwendig, die Zellwände zu perforieren, um einen solchen Druckausgleich zu ermöglichen.

Figur 1 zeigt eine bevorzugte Ausführung des luftdurchlässigen porösen Wabenkörpers nach der hier vorliegenden Erfindung.

Für viele konstruktive Anwendungen spielt die Temperaturbeständigkeit der Kernkörper eine wichtige Rolle. In einer bevorzugten Ausführungsform sind die erfindungsgemäßen Kernkörper so ausgestaltet, dass der Kernkörper eine hohe Temperaturbeständigkeit von über 350°C aufweist.

Für viele Anwendungen sind auch die dielektrischen Eigenschaften des Materials von hoher Bedeutung. Vorzugsweise zeichnen sich die erfindungsgemäßen Kernkörper dadurch aus, dass der Kernkörper hervorragende dielektrische Eigenschaften aufweist mit einer dielektrischen Konstante $\leq 1,1$, insbesondere $\leq 1,0$ und einem Verlustfaktor (Loss Tangent) von $< 0,003$, insbesondere $< 0,002$. Solche dielektrischen Eigenschaften sind insbesondere in Bereichen vorteilhaft, in denen es auf die Eigenschaften des Materials in Bezug auf elektromagnetische Strahlen, insbesondere im Radarbereich, ankommt.

Ein weiterer wichtiger Parameter für viele Anwendungen ist das Verhältnis von Druckfestigkeit zu Raumgewicht. Vorzugsweise sind die erfindungsgemäßen Kernkörper so ausgeführt, dass der Kernkörper ein Verhältnis von Druckfestigkeit zu Raumgewicht ≥ etwa $0{,}04\ \frac{\mathrm{MPa}}{\mathrm{kg/m^3}}$ aufweist.

Die vorliegende Erfindung betrifft auch ein Verfahren zur Herstellung eines Kernkörpers aus einem offenporigen Träger.

Bisher erfolgte die Herstellung von solchen Kernkörpern nach dem sogenannten Corrugated-Verfahren. Bei diesem dem Stand der Technik bekannten Corrugated-Verfahren wird das Gewebe mit Harz vorimprägniert. Dieses Vorimprägnat (auch Prepreg genannt) wird anschließend in eine Form geprägt, die einer Hälfte der gewünschten Zellgeometrie entspricht, also im Falle einer hexagonalen Wabe in Form einer halbhexagonalen Form. Im nächsten Schritt erfolgt eine Aushärtung des so geprägten Prepregs. Die geprägten Abschnitte werden anschließend lageweise miteinander verklebt, um so einen Kernkörper herzustellen.

Dieses aus dem Stand der Technik bekannte Corrugated-Verfahren wird in Figur 2 schematisch dargestellt.

Die nach diesem aus dem Stand der Technik bekannten Corrugated-Verfahren hergestellten Kernkörper weisen den Nachteil auf, dass sich ein geringes Raumgewicht nur innerhalb gewisser Grenzen mit einem vorteilhaften Verhältnis von Kompressionsmodul zu Raumgewicht bzw. mit einer geringen Zellgröße kombinieren lässt.

Die der Erfindung zugrundeliegende Aufgabe wird gelöst durch ein Verfahren zur Herstellung eines Kernkörpers aus einem offenporigen Trägermaterial, wobei das Trägermaterial ein Gewebe und/oder ein vließartiges Gebilde ist

i) eine Materialbahn aus einem Trägermaterial mittels einer Auftragseinrichtung in regelmäßigen Mustern mit Kleber-Streifen versehen wird;

ii) Stapel von Abschnitten der Materialbahn gebildet werden, die derart bezüglich der Streifenmuster gegeneinander versetzt aufeinanderliegen,

> iia) dass die Streifen eines untenliegenden Abschnitts jeweils zwischen den Streifen des jeweils darüber liegenden Abschnitts angeordnet sind; oder
>
> iib) dass die Streifen eines untenliegenden Abschnitts versetzt aber nicht mittig zwischen den Streifen des jeweils darüber liegenden Abschnitts angeordnet sind;

iii) jeweils aufeinanderliegende Abschnitte in den Bereichen der Streifen zu einem Stapel oder auch Pressblock miteinander verklebt werden;

iv) der Stapel expandiert wird, wobei sich eine Wabenform gleich welcher polygonalen Struktur herausbildet, insbesondere eine Wabenform hexagonaler, rechtwinkliger oder kreisförmiger Zellgeometrie zur Herstellung von hexagonalen, überexpandierten, rechtwinkligen und 3D-Wabenkernen;

v) die Wabenform mit einem Kunstharz imprägniert und/oder beschichtet wird, wobei der Träger in Form des Wabenkörpers nicht vollständig imprägniert und/oder beschichtet wird und eine Luftdurchlässigkeit über die offenporigen Zellwände zwischen den Zellen gewährleistet;

vi) die mit dem Kunstharz beschichtete Wabenform einem Aushärtungsschritt zum Aushärten des Kunstharzes unterzogen wird;

vii) die so gebildete Wabenform unter Ausbildung von Wabenkörpern geschnitten wird.

Das erfindungsgemäße Verfahren wird in Figur 3 schematisch beschrieben.

Ein ganz wesentlicher Unterschied des erfindungsgemäßen Verfahrens gegenüber dem bisher dem Stand der Technik bekannten Corrugated-Verfahren besteht darin, dass die Imprägnierung des Trägermaterials mit dem Kunstharz erst nach Ausprägung der Wabenform erfolgt. Bislang bestand in der Fachwelt ein Vorurteil, dass den Fachmann davon abgehalten hätte, eine solche Expansion ohne vorherige Verdichtung und Verschliessen mittels einer Imprägnierung in Erwägung zu ziehen, da die Herstellung des Wabenkörpers über einen Expansionprozess mit stark durchlässigen Trägern im industriellen Maßstab bislang für nicht durchführbar gehalten wurde.

Ein weiterer Grund ist, dass ein vor-imprägniertes Trägermaterial (Prepreg) sich heute kaum für die Herstellung einer Wabe eignet, wenn diese über den wirtschaftlicheren Expansionsprozess hergestellt werden sollte. Ein Prepreg wäre in der Zusammensetzung entweder zu reaktiv, so dass die abgelegten Prepregblätter beim Herstellen des Pressblocks vollständig verkleben würden und/ oder aber so hart und spröde, daß beim Expansionsprozess die einzelnen Lagen sich schwer trennen lassen, weil das Material zu steif geworden ist, örtlich auch dort verklebt und verhakt wo sich keine Knotenkleberlinien befinden und die Expansionspannungen daher zu hoch werden, sodass der Block beim Expandieren reisst.

Eine weiterer noch ganz wesentlicher Unterschied des erfindungsgemäßen Verfahrens gegenüber dem bisher im Stand der Technik bekannten Corrugated-Verfahren besteht darin, dass auch ein extrem stark offenporiger Träger verwendet werden kann, der dann leicht vorimprägniert werden kann,

- wobei die Harzmenge gerade so eingestellt wird, dass die Porosität des Trägers dann in den für den Druck- und Expansionsprozess verarbeitbaren Bereich gebracht wird;
- wobei die chemische Formulierung des Harzes angepasst wird durch z.B. die Zugabe von Additiven (u.a. Elastomeren) um das Harz auch nach vollständiger Aushärtung noch flexibel zu gestalten und nicht hart werden oder verspröden und brüchig werden zu lassen;
- wobei beim Vorimprägnierungsprozess (Prepregprozess) des Gewebes das Harz so weit vorreagiert wird, dass es sich beim Pressvorgang der einzelnen Lagen für das Herstellen des Pressblocks unmittelbar vor dem Expansionsschritt weder geringfügig verhakt noch verklebt.

In einer bevorzugten Ausführungsform handelt es sich bei dem erfindungsgemäßen Verfahren um ein Verfahren zur Herstellung eines Wabenkörpers.

In Bezug auf die Wahl des offenporigen Trägers unterliegt das erfindungsgemäße Verfahren keinen grundsätzlichen Einschränkungen. Das Ausmaß der Porosität spielt aber eine grosse Rolle - wie z.B. die Maschenweite beim Gewebe- um die bestmöglichen Prozess-Einstellungen zu finden. So kann ein harzfreier Träger oder ein leicht imprägnierter aber immer noch poröser Träger als Vormaterial zum Herstellen der Wabe über das Expansionsverfahren eingesetzt werden.

Es werden jedoch besonders vorteilhafte Ergebnisse erzielt, wenn das erfindungsgemäße Verfahren so ausgestaltet ist, dass der offenporige Träger ein Gewebe ist, bevorzugt aber nicht ausschließlich bestehend aus Glas- (E-,S2-, Quartz-), Kohle-, Kevlar-, Basaltfaser-, oder Hybridgeweben dieser genannten Faser.

Auch in Bezug auf den verwendeten Klebstoff beim Verkleben der Materialbahnen unterliegt das erfindungsgemäße Verfahren keinen prinzipiellen Einschränkungen. Besonders gute Ergebnisse werden jedoch erzielt, wenn als Klebstoff ein Duroplast, Thermoplast oder auch ein Elastomer bevorzugt aber nicht ausschließlich Phenol-, Epoxy-, Polyimid-, Cyanatesterklebstoff verwendet wird. Erstaunlicherweise hat sich gezeigt, dass es nach dem erfindungsgemäßen Verfahren möglich ist, die in Verfahrensschritt iv) ausgebildete Wabenform ohne vorherige Stabilisierung in Schritt v) mit einem Kunstharz zu beschichten. Die erzielten Ergebnisse können jedoch weiter verbessert werden, wenn nach dem Expansionsschritt iv) eine Stabilisierung der Wabenform durch thermische Behandlung erfolgt. Eine solche Stabilisierung der Wabenform durch thermische Behandlung erfolgt vorzugsweise beim Erweichungspunkt von thermoplastischen Materialien oder bei (ggfs. auch leicht unterhalb) der Glasübergangstemperatur (TG) von Duroplasten. Bei TG-freien Duroplasten kann auch eine thermische Behandlung bei oder über der Aushärtetemperatur kurzfristig zu einem Erweichen des Harzes und daher dann zur thermischen Umformung führen.

Bei der Dauer der thermischen Behandlung kann es sich bei direktem Kontakt mit dem Substrat um einige Sekunden bis Minuten handeln, wie z.B im Stanz oder Prägeverfahren. Bei großvolumigen Körpern, die für das Tempern mit heißer Luft durchströmt oder beaufschlagt werden, oder Körper die eine hohe Masse und / oder Wärmekapizität besitzen, kann die Wärmebehandlung einige Minuten bis einige Stunden dauern.

Letztendlich ist die Temperatur und die Zeit der Wärmebehandlung von der chemischen Zusammensetzung, von der Geometrie sowie auch vom Heißverformungs-Stabilisationsprozess abhängig.

Im Hinblick auf das verwendete Kunstharz unterliegt das erfindungsgemäße Verfahren keinen prinzipiellen Einschränkungen. Es hat sich jedoch gezeigt, dass besonders gute Ergebnisse erzielt werden, wenn als Kunstharz ein duroplastisches oder auch thermoplastisches Matrixsystem verwendet wird, bevorzugt aus der Familie der Cyanatester oder Polyimide ggfs. auch Phenole, Epoxide, Benzoxazine, BMI, Polyetherimide (PEI), Polyetherketone (PEK, PEEK,

PAEK, PEKK) Polythioether (PPS), Polyether (PP, PPO) ), oder auch aus gängigen Thermoplasten wie PE, PP PET, PA, PC PMMA oder dgl.. In einer besonders bevorzugten Ausführungsform wird als Kunstharz ein Cyanatester verwendet.

Das erfindungsgemäße Verfahren wird bevorzugt so ausgeführt, dass die Schritte v) und vi) ein- oder mehrfach wiederholt werden, um ein oder mehrere weitere Schichten des Kunstharzes aufzubringen. Eine solche Wiederholung der Schritte v) und vi) ermöglicht einerseits eine Erhöhung der Stabilität des Wabenkörpers, führt jedoch andererseits auch zu einer Erhöhung des Raumgewichtes. Der Fachmann wird daher in Abhängigkeit von den gewünschten Eigenschaften des nach dem erfindungsgemäßen Verfahren hergestellten Wabenkörpers wählen, ob die Schritte v) und vi) einfach oder mehrfach zu wiederholen sind.

Die vorliegende Erfindung betrifft auch einen nach dem oben beschriebenen Verfahren hergestellten Kernkörper, insbesondere in Form eines Wabenkörpers. Der nach dem erfindungsgemäßen Verfahren hergestellte Kernkörper zeichnet sich dadurch aus, dass der offenporige Träger nicht vollständig imprägniert und/oder beschichtet ist und eine Luftdurchlässigkeit über die offenporigen Zellwände zwischen den Zellen gewährleistet.

Vorzugsweise ist der nach dem erfindungsgemäßen Verfahren hergestellte Kernkörper so ausgebildet, dass der Kernkörper ein Verhältnis von Kompressionsmodul zu Raumgewicht ≥ etwa $5{,}5\ \frac{\mathrm{MPa}}{\mathrm{kg/m^3}}$ und besonders bevorzugt ≥ etwa $5{,}8\ \frac{\mathrm{MPa}}{\mathrm{kg/m^3}}$ aufweist.

Ein weiterer wichtiger Parameter für viele Anwendungen ist das Verhältnis von Druckfestigkeit zu Raumgewicht. Vorzugsweise sind die erfindungsgemäßen Kernkörper so ausgeführt, dass der Kernkörper ein Verhältnis von Druckfestigkeit zu Raumgewicht ≥ etwa $0{,}04\ \frac{\mathrm{MPa}}{\mathrm{kg/m^3}}$ aufweist.

In einer besonders bevorzugten Ausführungsform zeichnet sich der nach dem erfindungsgemäßen Verfahren hergestellte Kernkörper dadurch aus, dass der Kernkörper zusätzlich zu den geschilderten mechanischen Eigenschaften hervorragende dielektrische Eigenschaften aufweist mit einer dielektrischen Konstante ≤ 1,1, insbesondere ≤ 1,0 und einem Verlustfaktor (Loss Tangent) von < 0,003, insbesondere < 0,002.

Die vorliegende Erfindung wird nachfolgend noch näher erläutert:

Nach der hier bevorzugten Ausführungsform der Erfindung konnte ein Wabenkörper hergestellt werden bestehend aus einem Quartzglasgewebe und einem Cyanatesterharz, wobei bei einer Zellgröße von 6,4 mm und einer Dichte von 32 $kg/m^3$ ein Druckmodul von um die 275 MPa und eine Druckfestigkeit von um die 1,2 MPa erreicht wurde.

Die Figuren 4 bis 12 zeigen deutlich, daß der Stand der Technik ein vergleichbares Druckmodul kaum erreicht oder eine vergleichbare Druckfestigkeit lediglich nur bei hoher Dichte erreichen kann.

In den Figuren 4 bis 12 steht die Wabenbezeichnung

ECG-CEQ P-6,4-32

für eine Glassfaserwabe gefertigt mit **Q**uartzglas und **C**ynat**e**sterharz mit einer Zellgröße von **6,4** mm und einem Raumgewicht (RG, Dichte) von **32** $kg/m^3$. Das P gibt an, daß die Zellstege der Wabe porös/luftdurchlässig sind. Es ist üblich, dass diese Porosität durch eine Perforation mechanisch in die Zellwände eingebracht wird. In dieser hier bevorzugten Ausführung der Erfindung wurde diese Porosität aber natürlich generiert mittels einer angepassten Auswahl des Trägers und des Harzes, wobei beim Beschichten das Harz den Träger nicht vollständig verdichtet.

Die in Figur 4 gezeigte Tabelle zeigt die Eigenschaften einer solchen Wabe.

Die Figuren 5 und 6 zeigen eine graphische Auftragung der Messergebnisse für Druckmodul und Druckfestigkeit.

Bezugnehmend auf diese mechanischen Werte liegt im Vergleich zum Stand der Technik das Verhältnis von Druckmodul zur Dichte (oder Raumgewicht-RG) bei einem wesentlichen höheren Wert von: $> 5{,}5\ \frac{\mathrm{MPa}}{\mathrm{kg/m^3}}$, bevorzugt $> 5{,}8\ \frac{\mathrm{MPa}}{\mathrm{kg/m^3}}$, die letztendlich zu einer hohen Steifigkeit im Kern führt, die bis heute bei niedrigem Raumgewicht von 26-48 $kg/m^3$ einzigartig ist.

In der hier bevorzugten Variante der vorliegenden Erfindung liegt das Verhältnis von Druckmodul zu Raumgewicht zwischen 6 und $10\ \frac{\mathrm{MPa}}{\mathrm{kg/m^3}}$ bei einer Dichte von 32 $kg/m^3$ und kann sich sogar bei einer Dichte von 48 $kg/m^3$ um einen Wert von bei $12\ \frac{\mathrm{MPa}}{\mathrm{kg/m^3}}$ befinden. Im Vergleich zum Stand der Technik liegt dieser Wert bei einem RG von 48 $kg/m^3$ lediglich bei maximal $4\ \frac{\mathrm{MPa}}{\mathrm{kg/m^3}}$. Dies ist in Figur 7 gezeigt.

Ebenfalls, bezugnehmend auf diese mechanischen Werte liegt im Vergleich zum Stand der Technik auch das

Verhältnis der Druckfestigkeit zur Dichte (oder Raumgewicht-RG) bei einem Wert von 0,03 bis $0{,}047\ \frac{MPa}{kg/m^3}$ sogar leicht höher zum Stand der Technik und das bei einer geringeren Dichte von 32 kg/$m^3$im Vergleich zu 48 kg/$m^3$. Hierzu ist dann weiter zu erkennen, dass bei gleichwertiger Dichte (Raumgewicht) von 48 kg/$m^3$dieses Verhältnis der Druckfestigkeit zur Dichte einen wesentlichen höheren Wert hat von um die $0{,}07\ \frac{MPa}{kg/m^3}$ im Vergleich zum,

Stand der Technik der maximal um die $0{,}035\ \frac{MPa}{kg/m^3}$ liegt. Dies ist in Figur 8 gezeigt.

Weiter weist die Wabe nach der hier bevorzugten Ausführung der vorliegenden Erfindung zusätzlich zu den mechanischen Eigenschaften hervorragende dielektrische Werte auf, die aufgrund der hier verwendeten Rohmaterialien wie Cyanatester und Quartzglas zu entnehmen sind. Dies ist in den Figuren 9 und 10 gezeigt. Bei dem Cyanatesterharz handelt es sich um multifunktionelle Harzsysteme, deren funktionelle Gruppen entsprechend eingestellt werden um die hier geschilderten mechanischen Modul-/-Festigkeitswerte und dielektrischen Werte zu erreichen.

Was die Glasfasertype anbelangt so stellt die Quartzglasfaser die besten Voraussetzungen, die niedrig möglichsten die-elektrischen Werte zu erreichen.

Das Cyanatesterharz ist neben anderen Harzsysteme einsetzbar, wie das Polyimid und sogar auch Thermoplasten PE, PP, PEEK (und Derivate), Fluor-enthaltende Materialien (wie u.a. ETFA, PTFE und ähnliche) die ebenfalls auch in Form von Filmen oder auch Laminaten extrem niedrige dielektrische Werte aufweisen.

Was die hier bevorzugte Ausführung der vorliegenden Erfindung betrifft, besteht die Basiskomponente des Cyanatesterharz aus einem 2-funktionellen Cyansaüreester, das unter Einwirkung von Temperatur in einer ringförmigen Struktur zyklotrimerisiert und einen Triazin-ring bildet. Diese Reaktion wird bei einer Temperatur von wenigstens 165°C ausgelöst. Je nach Zugabe von Katalysatoren lässt sich diese Temperatur auch noch wesentlich verringern.

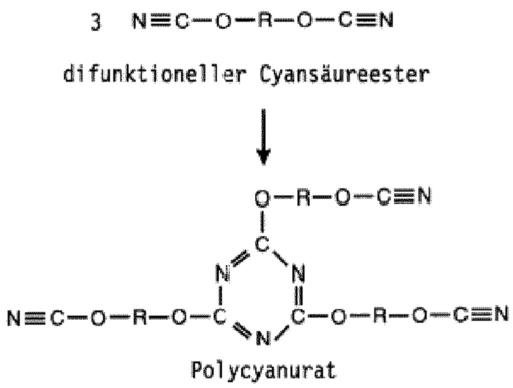

Ausschlaggebend für eine gute Vernetzung des Harzes ist es, Aushärtezyklen zu finden, die nach jedem Tauchgang des Wabenkörpers stattfinden.

Letztendlich muss garantiert sein, dass das Harz vollständig ausgehärtet wird, keine Restreaktivität entsteht und eine Temperaturbeständigkeit um die 400°C erreicht wird.

Was nun die Reaktivität anbelangt, so gibt es nur wenig Erfahrung in der Verarbeitung von nicht oder wenig katalysierten Cyanatester-Systemen. Problematisch ist es hier, die Reaktionsgeschwindigkeit und die Temperaturen abzuschätzen, die auf das Harz einwirken müssen um zu einer vollständigen Aushärtung zu gelangen.

Besonders gute Ergebnisse konnten durch Auswahl von geeigneten Aushärtezyklen wie folgt erzielt werden:

- zwischen den einzelnen Beschichtungsschritten wird eine geringere Aushärtetemperatur gefahren, um die aufgetragene Lage teils auszuhärten, die ermöglicht dass jede neue Beschichtungslage an Harz sich optimal an die darunterliegende teils ausgehärtete Lage anbindet. Diese Aushärtetemperatur liegt bei der niedrigst möglichen Aushärtetemperatur des Harzes. Der Temperaturzyklus zum Erreichen dieser Rektionstemperatur kann (muß aber nicht) mehrstufig ausgelegt sein, so daß unter optimalen Voraussetzung die Temperatur nicht in einem Aufheizgang erreicht wird.
- nach dem letzten Beschichtungsschritt wird ein vollständiger Aushärtezyklus stufenweise durchgeführt bis auf und über die gewünschte Temperatur, bei der letztendlich die Temperaturfestigkeit abverlangt wird, in diesem Falle 400°C.

Zum Erreichen dieser Temperaturfestigkeit spielt die letzte Temperaturstufe zwar eine wesentliche Rolle, alleine aber das gesamte Herstellverfahren mit den unterschiedlichen Aushärtezyklen und Zwischenstufen garantieren ein optimales Vernetzen der Beschichtungslagen.

Weiter spielen natürlich auch der Festoffgehalt und das Lösemittel (meist ketonhaltige Lösemittel wie Azeton, MEK, -butanon, Cyklohexanon, Diisopropylketon und ähnliche) sowie auch die Auftragsmenge bei jeder Beschichtung und auch die eigentliche Harzrezeptur eine ebenfalls wesentliche Rolle um zu dem Ergebnis dieser hohen Temperaturbeständigkeit zu gelangen. Der Feststoffgehalt der hier verwendeten Lösung liegt bei 20-70%, bevorzugt dann aber bei 40-60%.

Ein Zumischen von weiteren Chemikalien wie z.B. aber nicht ausschließlich Epoxyhaltigen Komponenten zur weiteren Funktionalisierung und Veränderung des Eigenschaftenprofils des Harzes ist ebenfalls möglich.

Weitere Messungen, wie eine thermogravimetrische Analyse, haben gezeigt, dass unter Berücksichtigung der zuvor beschrieben angepassten Harzformulierung und des Beschichtungs- und Aushärteprozesses eine wesentliche Steigerung der Temperaturbeständigkeit erzielt wurde.

Nach der hier bevorzugten Variante der vorliegenden Erfindung, findet eine wesentliche Veränderung des Harzes erst bei einer Temperatur von 400°C statt, im Vergleich zum Stand der Technik, bei der diese Veränderung schon bei 300°C stattfindet.

Figur 11 zeigt eine TGA (thermogravimetrische) Messungen zur Messung der Temperaturbeständigkeit.

Ein weiterer Aspekt ist, dass der Prüfkörper unter Einfluss von extremen Temperaturen und Vakuumbedingungen, die nach der Prüfnorm ECSS-Q-ST-70-02C spezifiziert sind, nicht zu Ausgasungsprodukten führt. Letzteres ist besonders wichtig in kritischen Anwendungen im Raumfahrtbereich, da diese Ausgasungen in der Übermittlung von Daten oder dgl. stören können.

Die in Figur 12 gezeigte Tabelle fasst die hier erzielten Ergebnisse zusammen.

Ein weiterer wichtiger Bestandteil der hier vorliegenden Erfindung besteht darin, einen offenporigen Wabenkörper zu gestalten, indem das Verhältnis Harz zu Träger optimal ausgelegt wird.

Letzteres ist aber auch abhängig von der Porositätsstruktur (z. B. beim Gewebe den Webstyle) und von dem Fliess- und Viskositätsverhalten des Matrixsytems während des Auftrages sowie auch bei der Aushärtung, so dass ein Harzanteil von 5-60 Gew.-%, bevorzugt 5-80 Gew%, eingehalten wird. In der hier bevorzugten Ausführung der Erfindung liegt der Harzgehalt bei 10-20 Gew.-%, bevorzugt 9-21 Gew%.

Mittels dünnflüssigen- niedrig Viskosen Matrix-systemen von 100 bis zu 1000 mPas (Cps) kann Luftdurchlässigkeit und Porosität selbst auch bei hohen Matrix-Auftragsanteilen erreicht werden. Letzteres ist nahezu unabhängig von der Maschenweite des Gewebes, sondern lediglich abhängig von der Viskosität und dem Fliessverhalten des Harzes und der Auftragsmenge bei jedem Beschichtungsvorgang. In der der hier bevorzugten Ausführung der vorliegenden

Erfindung wurden Gewebestrukturen verwendet mit einer Porosität von 2-40% und einer Maschenweite von 100-800 Mikrometer. Ohne Letzteres näher einzugrenzen bezieht sich eine bevorzugte Variante auf eine Porosität von 20-30% und einer Maschenweite von 200-500 Mikrometer.

Figur 13 zeigt mikroskopische Aufnahmen von Geweben unterschiedlicher Porosität und Maschenweite.

Bei höher-viskosen Matrixsystemen kann diese Porosität und Luftdurchlässigkeit nach der Beschichtung auch noch bewahrt werden mit Matrixsystemen bis zu einer Viskosität von 3000 Cps. Letzteres ist dann auch wieder abhängig von der Offenporigkeit des Trägermaterials -bei den Geweben der Maschenweite-, die u.a. über die Luftdurchlässigkeit definiert werden kann.

Ein Gewebe mit einer hohen Porosität von 40% und oder mit einer großen Maschenweite von 300-800 Mikrometer (mit großen Poren) kann mit Matrixsystemen beschichtet werden, die sich im höheren Viskositätsbereich befinden, d.h. von um die 3000 Cps, ohne dass die Poren nach der Beschichtung und Aushärtung vollständig verschließen.

Insbesondere bei hohen Porositäten besteht eine weitere bevorzugte Ausführungsform der Erfindung darin, den offenporigen Träger, ggfs. das Gewebe, vor der Wabenherstellung teilweise zu imprägnieren um die Offenporigkeit zu verringern und eine Weiterverarbeitung nach dem hier geschilderten Herstellpozess des Expansionsverfahrens zu vereinfachen.

Beim Vorimprägnieren wird allgemein der Träger oder das Gewebe vorzugsweise bei hoher Porosität mit einer Harzmischung teilweise verdichtet, in einem Gewichtsverhältnis zum reinen Trägergewicht von 10-75 Gew%. Bevorzugt liegt das Gewichtsverhältnis bei 40-60 Gew%. Bei dieser Harzmischung kann es sich um Harze handeln, die auf einem duroplastischen und/oder auch thermoplastischen Matrixsystem beruhen, bevorzugt aus der Familie der Cyanatester oder Polyimide ggfs auch Phenole, Epoxide, Benzoxazine, BMI, Polyetherimide (PEI), Polyetherketone (PEK, PEEK, PAEK, PEKK) Polythioether (PPS), Polyether (PP, PPO)), oder auch aus gängigen Thermoplasten wie PE, PP PET, PA, PC PMMA oder dgl.. In einer besonders bevorzugten Ausführungsform wird als Kunstharz ein Cyanatester verwendet.

Diese Harzmischungen können aus mehreren der oben angeführten Matrixsysteme bestehen, mit dem Ziel eine elastische Harzbindung zu bekommen, die das Gewebe auch nach der Vorbeschichtung/Imprägnierung und ggfs nachgeschalteter Aushärtung elastische und flexibel gestaltet.

Weiter können diese Harzmischungen auch mit Lösemitteln und Additiven versetzt sein, wobei die Additive Elastomere sein können, um das Harz zu flexibilisieren oder auch Vernetzer, Härter und/oder Katalysatoren, um das Harz vollständig zu vernetzen und dann auch temperaturbeständig zu gestalten. Letzteres kann wichtig sein bei der Herstellung

des verklebten Stapels -auch Pressblock genannt-, um zu vermeiden, dass bei hohen Temperaturen von z.B. 150°C bis zu 250°C und unter Druck von 5bar bis zu 100 bar bei dem eigentlichen Verklebungsprozess eine zwischenlagige Verklebung nur bei dem linienförmigen Knotenkleber hergestellt wird und es nicht zu vollflächigen Verklebungen oder Verhakungen zwischen den einzelnen Lagen kommt. Letzteres kann dazu führen, dass der Expansionsprozess nicht umsetzbar ist.

Die Flexibilität des Trägers oder ggfs. des Gewebes garantiert eine Expansion des Blocks, ohne daß der Träger reisst oder zu hohe Expansionskräfte aufgebracht werden müssen um die einzelnen Lagen voneinander zu trennen. Bei zu hohen Expansionskräften lösen sich die einzelnen Lagen vollständig voneinander, da der Knotenkleber nicht im Stande ist sich diesen Kräften zu stellen und sich daher adhäsiv oder auch kohäsiv vom Trägermaterial löst, was unmittelbar zum vollständigen Bruch des Wabenblocks führt.

Figur 14 zeigt nochmals eine bildmäßige Illustration eines porösen, nicht vollständig dicht beschichteten Wabenkörpers.

Die hier vorliegende Erfindung begrenzt sich aber nicht nur auf Waben und allgemein Kernkörper, die eine Luftdurchlässigkeit und oder Porosität umfassen, sondern betrifft auch vollständig beschichtete Kernkörper. Die poröse Variante stellt lediglich eine gesonderte Form der vorliegenden Erfindung dar, wobei eine nicht vollständig beschichtete und poröse Variante letztendlich aus mechanischer Sicht die eher schwächere Variante darstellt, mit der dann trotzdem mechanische Kennwerte (hier insbesondere Druckfestigkeit und Druckmodule) erreicht werden, die über dem Stand der Technik liegen.

Ein weiteres bevorzugtes Merkmal der vorliegenden Erfindung besteht darin einen Wabenkörper näher zu definieren umfassend einen mit Harz imprägnierten oder beschichteten - Träger, wobei der Begriff Harz im breiteren Sinne zu interpretieren ist und sich im wesentlichen auf duroplastische und thermoplastische Kunststoffsysteme bezieht.

Der Begriff "umfassend" kann im Rahmen der vorliegenden Erfindung auch "bestehend aus" bedeuten.

Der mit Harz imprägnierte Träger bildet vorzugsweise die Zellstege des Kern-oder Wabenkörpers, wobei ein wesentliches Ziel der vorliegenden Erfindung darin besteht einen Wabenkörper mit dünnwandigen und leichten Zellstegen aufzubauen, letzteres lässt sich über das Flächengewicht des beschichteten Trägers, der den Zellsteg des Kernkörpers oder hier der Wabe bildet genau bestimmen.

Bei einer hexagonalen Zellgeometrie, die eine der bevorzugten Fassung der vorliegenden Erfindung ist, lässt sich das RG (Raumgewicht) der Wabe über das FG (Flächengewicht) des Trägers mit Harz und der Zellgrösse wie folgt berechnen:

$$\text{RG (Wabe)} = 4/3*2/\text{Zellgrösse}*\text{FG(Träger+Harz)}$$

Andere Zellstrukturen, zylinderförmig, überexpandiert und auch die 3D-Struktur der Wabe, berechnen sich in ähnlicher Weise. Ohne im Detail auf weitere Berechnungen einzugehen ist diese hier angeführte Berechnungsformel für die Berechnung von Raumgewicht der Wabe mit dem Flächengewicht des imprägnierten bzw. beschichteten Trägers auch bei veränderten Zellgeometrien mit einer Genauigkeit von um die 20-25% anwendbar.

Ein grundsätzliches Ziel der hier vorliegenden Erfindung besteht darin Kernkörper z.B. in Form von Wabenkörper herzustellen in einem RG-Bereich (RG= Raumgewicht) von 26-48 $kg/m^3$ und dies mit einer Zellweite von 1,6 bis 9,6mm. Ein wesentliches Ziel der hier vorliegenden Erfindung ist, dass diese Kernkörper hohe mechanische Eigenschaften im Verhältnis zum Raumgewicht aufweisen.

Wesentlich ist ein Druckmodul zu Raumgewicht von $\geq 4{,}5\ \frac{\text{MPa}}{\text{kg/m}^3}$, bevorzugt $\geq 5{,}5\ \frac{\text{MPa}}{\text{kg/m}^3}$, besonders bevorzugt $\geq 5{,}8\ \frac{\text{MPa}}{\text{kg/m}^3}$, das sogar ganz besonders bevorzugt $12\ \frac{\text{MPa}}{\text{kg/m}^3}$ erreichen kann. Weiter ist ebenfalls auch das Verhältnis von Druckfestigkeit zu Raumgewicht von $0{,}03\ \frac{\text{MPa}}{\text{kg/m}^3}$ bis $0{,}047\frac{\text{MPa}}{\text{kg/m}^3}$ bevorzugt $0{,}06\frac{\text{MPa}}{\text{kg/m}^3}$, dass sogar auch besonders vorzugsweise $0{,}07\frac{\text{MPa}}{\text{kg/m}^3}$ erreichen kann. Dass grundsätzlich auch diese hohen mechanischen Eigenschaften bei einer niedrigen Dichte von 26 $kg/m^3$ erreicht werden können belegt die Fig 15.

Hier wird ersichtlich, dass innerhalb einer Messtoleranz von 5%, die experimentell zulässig ist, ein Druckmodul von 150N auch bei einem niedrigen Raumgewicht der Wabe von 26 $kg/m^3$ erreicht werden kann. In Fig. 15 ist dieser Bereich über den kreisförmig markierten Bereich der extrapolierten Werten gekennzeichnet. Demnach ist dann ein Verhältnis von Druckmodul zu Raumgewicht von $5{,}5\ \frac{\text{MPa}}{\text{kg/m}^3}$, vorzugsweise $5{,}8\ \frac{\text{MPa}}{\text{kg/m}^3}$ auch bei diesem niedrigen RG von 26$kg/m^3$ immer noch erreichbar.

Ein weiteres bevorzugtes Merkmal der vorliegenden Erfindung besteht darin diese Wabenkörper bevorzugt aber nicht zwingend über einen Expansionsprozess herzustellen.

Nachstehend werden bevorzugte Ausführungen von Wabenkörpern und Zellgrössen angeführt, wobei die Toleranzen in bezug auf die Zellgrösse und RG der Wabe üblicherweise bei ±10% liegen. Die hier berechneten Flächengewichte für den imprägnieren Träger der Wabe befindet sich daher in einem Toleranzbereich von um die ±10 bis 25%, bevorzugt ±20%.

Der obere Flächengewichtsbereich des imprägnierten Trägers, der den Wabensteg bildet berechnet sich aus einer Wabe mit der grössten Zellweite und dem für diese Zellweite höchsten Raumgewicht von 40 kg/m$^3$.

- Für einen Wabenkörper mit einer Zellweite von 9,6mm und einem RG von 40 kg/m$^3$ hat der imprägnierte Träger, der die Stege des Wabenkörpers bildet ein Flächengewicht von 144g/m$^2$.

Der untere Flächengewichtsbereich des imprägnierten Trägers, der den Wabensteg bildet, berechnet sich aus einer Wabe mit der kleinster Zellgrösse und dem hier geringsten Raumgewicht von 26 kg/m$^3$.

- Für einen Wabenkörper mit einer Zellweite von 1,6mm und einem RG von 26 kg/m$^3$ hat der imprägnierte Träger, der die Stege des Wabenkörpers bildet ein Flächengewicht von 15,6g/m$^2$.

Folgende Beispiele sind weitere Ausführungsformen der vorliegenden Erfindung, je nach Zellgrösse und Wabenraumgewicht, die bevorzugt berücksichtigt werden. Für einen Wabenkörper mit einer Zellgrösse von 9,6mm und einem RG 26 bis 40 kg/m$^3$ hat der imprägnierten Träger vorzugsweise ein Flächengewicht von 144 bis 94g/m$^2$.

Für einen Wabenkörper mit einer Zellgrösse von 9,6mm und einem RG 40 kg/m$^3$ hat der imprägnierten Träger vorzugsweise ein Flächengewicht von 144 g/m$^2$.

Für einen Wabenkörper mit einer Zellgrösse von 9,6mm und einem RG 32 kg/m$^3$

hat der imprägnierten Träger vorzugsweise ein Flächengewicht von 115 g/m$^2$.

Für einen Wabenkörper mit einer Zellgrösse von 9,6mm und einem RG 26 kg/m$^3$ hat der imprägnierten Träger vorzugsweise ein Flächengewicht von 94 g/m$^2$.

Für einen Wabenkörper mit einer Zellgrösse von 6,4mm und einem RG 26 bis 48 kg/m3 hat der imprägnierten Träger vorzugsweise ein Flächengewicht von 115 bis 62g/m$^2$.

Für einen Wabenkörper mit einer Zellgrösse von 6,4mm und einem RG 48 kg/m3 hat der imprägnierten Träger vorzugsweise ein Flächengewicht von 115 g/m$^2$.

Für einen Wabenkörper mit einer Zellgrösse von 6,4mm und einem RG 40 kg/m$^3$ hat der imprägnierten Träger vorzugsweise ein Flächengewicht von 96 g/m$^2$.

Für einen Wabenkörper mit einer Zellgrösse von 6,4mm und einem RG 32 kg/m$^3$ hat der imprägnierten Träger vorzugsweise ein Flächengewicht von 77 g/m$^2$.

Für einen Wabenkörper mit einer Zellgrösse von 6,4mm und einem RG 26 kg/m$^3$ hat der imprägnierten Träger vorzugsweise ein Flächengewicht von 62 g/m$^2$.

Für einen Wabenkörper mit einer Zellgrösse von 4,8mm und einem RG 26 bis 48 kg/m$^3$ hat der imprägnierten Träger vorzugsweise ein Flächengewicht von 86 bis 47g/m$^2$.

Für einen Wabenkörper mit einer Zellgrösse von 4,8mm und einem RG 48 kg/m$^3$ hat der imprägnierten Träger vorzugsweise ein Flächengewicht von 86 g/m$^2$.

Für einen Wabenkörper mit einer Zellgrösse von 4,8mm und einem RG 40 kg/m$^3$ hat der imprägnierten Träger vorzugsweise ein Flächengewicht von 72 g/m$^2$.

Für einen Wabenkörper mit einer Zellgrösse von 4,8mm und einem RG 32 kg/m$^3$ hat der imprägnierten Träger vorzugsweise ein Flächengewicht von 57 g/m$^2$.

Für einen Wabenkörper mit einer Zellgrösse von 4,8mm und einem RG 26 kg/m$^3$ hat der imprägnierten Träger vorzugsweise ein Flächengewicht von 47 g/m$^2$.

Für einen Wabenkörper mit einer Zellgrösse von 3,2mm und einem RG 26-48 kg/m$^3$ hat der imprägnierten Träger vorzugsweise ein Flächengewicht von 57 bis 31g/m$^2$.

Für einen Wabenkörper mit einer Zellgrösse von 3,2mm und einem RG 48 kg/m$^3$ hat der imprägnierten Träger vorzugsweise ein Flächengewicht von 57 g/m$^2$.

Für einen Wabenkörper mit einer Zellgrösse von 3,2mm und einem RG 40 kg/m$^3$ hat der imprägnierten Träger vorzugsweise ein Flächengewicht von 48 g/m$^2$.

Für einen Wabenkörper mit einer Zellgrösse von 3,2mm und einem RG 32 kg/m$^3$ hat der imprägnierten Träger vorzugsweise ein Flächengewicht von 38 g/m$^2$.

Für einen Wabenkörper mit einer Zellgrösse von 3,2mm und einem RG 26 kg/m$^3$ hat der imprägnierten Träger vorzugsweise ein Flächengewicht von 31 g/m$^2$.

Für einen Wabenkörper mit einer Zellgrösse von 1,6mm und einem RG 26 bis 48 kg/m$^3$ hat der imprägnierten

Träger vorzugsweise ein Flächengewicht von 29 bis 15g/m$^2$.

Für einen Wabenkörper mit einer Zellgrösse von 1,6mm und einem RG 48 kg/m$^3$ hat der imprägnierten Träger vorzugsweise ein Flächengewicht von 29 g/m$^2$.

Für einen Wabenkörper mit einer Zellgrösse von 1,6mm und einem RG 40 kg/m$^3$ hat der imprägnierten Träger vorzugsweise ein Flächengewicht von 24 g/m$^2$.

Für einen Wabenkörper mit einer Zellgrösse von 1,6mm und einem RG 32 kg/m$^3$ hat der imprägnierten Träger vorzugsweise ein Flächengewicht von 19 g/m$^2$.

Für einen Wabenkörper mit einer Zellgrösse von 1,6mm und einem RG 26 kg/m$^3$ hat der imprägnierten Träger vorzugsweise ein Flächengewicht von 15,6 g/m$^2$.

Fig 16 zeigt eine grafische Darstellung dieser zuvor angeführten Ausführungsfomen, in dem das Flächengewichte des beschichteten Trägers in der Wabe angeführt wird, bezogen auf den Wabentypen mit Angabe der Zellgrösse und der Raumgewichte

Das Flächengewicht des nicht imprägnierten Trägers (Rohgewicht des Trägers), der die Wabenstege bildet, und der nach der hier vorliegenden Erfindung als Ausgangsmaterial verwendet wird, ist abhängig vom Gewichtsanteil der Beschichtung auf dem Träger.

Dieser Gewichtsanteil der Beschichtung oftmals auch als Harzanteil benannt, liegt vorzugsweise zwischen 5-60 Gew.-%, besonders bevorzugt zwischen 5-80 Gew.-%.

Ohne Einschränkung auf den Umfang der hier vorliegenden Erfindung liegt bei einer bevorzugten Ausführung der hier vorliegenden Erfindung der Träger bei einem Rohgewicht von 60 bis 70g/m$^2$ für eine Wabe mit einer Zellgrösse von 6,4mm und einem Raumgewicht von 32 kg/m$^3$.

Der Harzgehalt - Gewichtsanteil des Harzes auf dem Träger lässt sich wie folgt berechnen:
Rohraumgewicht des Blocks an unbeschichtetem /-rohem Träger nach oben angeführter Formel: 4/3*2/6,4*60 bis 4/3*2/6,4*70 = 25 bis 29 kg/m$^3$.

Das Raumgewicht des Blocks nach Imprägnierung mit dem beschichteten Träger ist 32 kg/m$^3$

Aus diesen Daten berechnet sich das Harzgewicht im Block (ohne Träger) wie folgt: 32-25 bis 32-29 = 3 bis 7 kg/m$^3$, und der Harzgehalt im Block bezogen auf das Gewicht des beschichten Trägers liegt dann zwischen 3/32 bis 7/32= 9 bis 21 Gew%.

Nach Angabe des hier angeführten Flächengewicht des imprägnierten Trägers von 16 bis 144 g/m$^2$ und einem Harzgehalt von 5 Gew.-% bis 80 Gew.-%, kann der rohe unbeschichtete Träge als Ausgangsmaterial in einem Gewichtsbereich zwischen : 3 g/m$^2$ und 137 g/m$^2$ liegen von im Block ebenfalls in einem Toleranzbereich von ±20%.

Erläuterung von Abkürzungen und Fachausdrücken:

- Zellmass, Zellweite und Zellgrösse haben die gleiche Bedeutung
- Druckfestigkeit und Kompressionsfestigkeit haben die gleiche Bedeutung
- Druckmodul und Kompressionsmodul haben die gleiche Bedeutung
- Ein nach dem Ablegeprozess der Trägerlagen hergestellter Stapel oder gestapelter Wabenblock wird nach dem Klebevorgang auch Pressblock genannt
- FG steht für Flächengewicht
- RG steht für Raumgewicht

## Patentansprüche

1. Kernkörper, wobei die folgende Bedingung a) erfüllt wird:

   a) er weist ein Raumgewicht von ≤ etwa 48, insbesondere ≤ etwa 40, stärker bevorzugt ≤ etwa 32 kg/m$^3$ und ganz besonders bevorzugt ≤ 26 kg/m$^3$ auf;

   und wobei die Bedingung b) erfüllt wird:

   b) er weist ein Verhältnis von Kompressionsmodul zu Raumgewicht ≥ etwa $4{,}5\ \frac{\mathrm{MPa}}{\mathrm{kg/m^3}}$, bevorzugt $\geq 5{,}5\ \frac{\mathrm{MPa}}{\mathrm{kg/m^3}}$, besonders bevorzugt $\geq 5{,}8\ \frac{\mathrm{MPa}}{\mathrm{kg/m^3}}$ auf;

2. Kernkörper gemäß Anspruch 1, **dadurch gekennzeichnet, dass** der Kernkörper eine Zellgröße von ≤ etwa 9,6 mm, insbesondere ≤ 6,4 mm und bevorzugt ≤4,8mm und besonders bevorzugt ≤ 3,2 mm und ganz besonders bevorzugt ≤1,6mm aufweist.

3. Kernkörper gemäß mindestens einem der vorhergehenden Ansprüche, **dadurch gekennzeichnet, dass** der Kernkörper ein Wabenkörper ist, wobei der Wabenkörper eine polygonale, vorzugsweise eine hexagonale, rechtwinklige oder kreisförmige Zellgeometrie aufweist.

4. Kernkörper gemäß mindestens einem der vorhergehenden Ansprüche, **dadurch gekennzeichnet, dass** der Kernkörper aus Glas- (E-,S2-), Kohle-, Kevlar-, Basaltfaser, bevorzugt einer Quarzglasfaser, oder aus Hybridkonstruktionen dieser genannten Fasern hergestellt ist.

5. Kernkörper gemäß mindestens einem der vorhergehenden Ansprüche, **dadurch gekennzeichnet, dass** der Kernkörper ein Quarzglasfaser-Kunststoff-Verbund ist.

6. Kernkörper gemäß mindestens einem der vorhergehenden Ansprüche, **dadurch gekennzeichnet, dass** der Kernkörper aus einem Kunststoff hergestellt ist, der eine duroplastische oder auch thermoplastische Matrix umfasst, bevorzugt aus der Familie der Cyanatester oder Polyimide ggfs auch Phenole, Epoxide, Benzoxazine, BMI, Polyetherimide (PEI), Polyetherketone (PEK, PEEK, PAEK, PEKK) Polythioether (PPS), Polyether (PP, PPO).

7. Kernkörper gemäß mindestens einem der vorhergehenden Ansprüche, **dadurch gekennzeichnet, dass** der Kernkörper ein Verbund ist bestehend aus Fasern und/oder einem andern Träger-oder Füllmaterialen und einem Kunststoff, der eine duroplastische oder auch thermoplastische Matrix umfasst, bevorzugt aus der Familie der Cyanatester oder Polyimide ggfs auch Phenole, Epoxide, Benzoxazine, BMI, Polyetherimide (PEI), Polyetherketone (PEK, PEEK, PAEK, PEKK) Polythioether (PPS), Polyether (PP, PPO).

8. Kernkörper gemäß mindestens einem der vorhergehenden Ansprüche, **dadurch gekennzeichnet, dass** der Kernkörper aus einem Gewebe und/oder einem vließartigen Gebilde hergestellt ist.

9. Kernkörper gemäß Anspruch 8, **dadurch gekennzeichnet, dass** das Gewebe nicht vollständig imprägniert und/oder beschichtet ist und eine Luftdurchlässigkeit über die offenporigen Zellwände zwischen den Zellen gewährleistet.

10. Kernkörper gemäß mindestens einem der vorhergehenden Ansprüche, **dadurch gekennzeichnet, dass** der Kernkörper eine hohe Temperaturbeständigkeit von über 350°C aufweist.

11. Kernkörper gemäß mindestens einem der vorhergehenden Ansprüche, **dadurch gekennzeichnet, dass** der Kernkörper hervorragende dielektrische Eigenschaften aufweist mit einer dielektrischen Konstante $\leq 1{,}1$, insbesondere $\leq 1{,}0$ und einem Verlustfaktor (Loss Tangent) von $< 0{,}003$, insbesondere $< 0{,}002$.

12. Kernkörper gemäß mindestens einem der vorhergehenden Ansprüche, **dadurch gekennzeichnet, dass** der Kernkörper ein Verhältnis von Druckfestigkeit zu Raumgewicht ≥ etwa $0{,}04\ \frac{\mathrm{MPa}}{\mathrm{kg/m^3}}$ bevorzugt $\geq 0{,}06\ \frac{\mathrm{MPa}}{\mathrm{kg/m^3}}$ aufweist.

13. Verfahren zur Herstellung eines Kernkörpers aus einem offenporigen Trägermaterial, wobei das Trägermaterial ein Gewebe und/oder ein vließartiges Gebilde ist

i) eine Materialbahn aus einem Trägermaterial mittels einer Auftragseinrichtung in regelmäßigen Mustern mit Kleber-Streifen versehen wird;
ii) Stapel von Abschnitten der Materialbahn gebildet werden, die derart bezüglich der Streifenmuster gegeneinander versetzt aufeinanderliegen,

iia) dass die Streifen eines untenliegenden Abschnitts jeweils zwischen den Streifen des jeweils darüber liegenden Abschnitts angeordnet sind; oder
iib) dass die Streifen eines untenliegenden Abschnitts versetzt aber nicht mittig zwischen den Streifen des jeweils darüber liegenden Abschnitts angeordnet sind;

iii) jeweils aufeinanderliegende Abschnitte in den Bereichen der Streifen miteinander verklebt werden;
iv) der Stapel expandiert wird, wobei sich eine Wabenform gleich welcher polygonalen Struktur herausbildet, insbesondere eine Wabenform hexagonaler, rechtwinkliger oder kreisförmiger Zellgeometrie zur Herstellung von hexagonalen, überexpandierten, rechtwinkligen und 3D-Wabenkernen;
v) die Wabenform mit einem Kunstharz imprägniert und/oder beschichtet wird, wobei der Träger in Form des

Wabenkörpers nicht vollständig mit einem Harz imprägniert und/oder beschichtet wird und eine Luftdurchlässigkeit über die offenporigen Zellwände zwischen den Zellen gewährleistet;
vi) die mit dem Kunstharz beschichtete Wabenform einem Aushärtungsschritt zum Aushärten des Kunstharzes unterzogen wird;
vii) die so gebildete Wabenform unter Ausbildung von Wabenkörpern geschnitten wird.

**14.** Verfahren nach Anspruch 13, **dadurch gekennzeichnet, dass** der offenporige Träger bevorzugt, aber nicht ausschließlich bestehend aus Glas- (E-,S2-, Quartz-), Kohle-, Kevlar-, Basaltfaser-, oder Hybridgeweben dieser genannten Faser ist.

**15.** Verfahren nach Anspruch 14, **dadurch gekennzeichnet, dass** der Träger teilweise mit einem Harz vorimprägniert oder beschichtet ist um die Porosität vor dem Expansionsprozess zu verringern, wobei nach der Beschichtung die Porosität unter 40% liegt und die Beschichtung sich in einem Gewichtsverhältnis von 10-75% zum Trägergewicht befindet und der beschichtete Träger nach dem Beschichten und ggfs. Aushärten temperaturstabil ist bei 160-250°C und flexibel gestaltet ist, um das Umformen dieser vorimprägnierten Lagen beim Expansionsprozess mit niedrigen Expansionskräften umzusetzen.

**16.** Verfahren nach einem der Ansprüche 13 bis 15, **dadurch gekennzeichnet, dass** als Klebstoff ein Duroplast, Thermoplast oder auch ein Elastomer bevorzugt aber nicht ausschließlich Phenol-, Epoxy-, Polyimid-, Cyanatesterklebstoff verwendet wird.

**17.** Verfahren gemäß mindestens einem der Ansprüche 13 bis 16, **dadurch gekennzeichnet, dass** nach dem Expansionsschritt iv) eine Stabilisierung der Wabenform durch thermische Behandlung erfolgt.

**18.** Verfahren gemäß mindestens einem der Ansprüche 13 bis 17, **dadurch gekennzeichnet, dass** als Harz ein duroplastisches oder auch thermoplastisches Matrixsystem verwendet wird, bevorzugt aus der Familie der Cyanatester oder Polyimide ggfs auch Phenole, Epoxide, Benzoxazine, BMI, Polyetherimide (PEI), Polyetherketone (PEK, PEEK, PAEK, PEKK) Polythioether (PPS), Polyether (PP, PPO).

**19.** Verfahren gemäß mindestens einem der Ansprüche 13 bis 18, **dadurch gekennzeichnet, dass** die Schritte v) und vi) ein- oder mehrfach wiederholt werden, um ein oder mehrere weitere Schichten des Kunstharzes aufzubringen.

**20.** Kernkörper gemäß Anspruch 1, hergestellt gemäß dem Verfahren nach mindestens einem der Ansprüche 13 bis 19.

**21.** Kernkörper gemäß Anspruch 20, **dadurch gekennzeichnet, dass** der offenporige Träger nicht vollständig imprägniert und/oder beschichtet ist und eine Luftdurchlässigkeit über die offenporigen Zellwände zwischen den Zellen gewährleistet.

**22.** Kernkörper gemäß Anspruch 20 und 21, **dadurch gekennzeichnet, dass** der Kernkörper hervorragende dielektrische Eigenschaften aufweist mit einer dielektrischen Konstante ≤ 1,1, insbesondere ≤ 1,0 und einem Verlustfaktor (Loss Tangent) von < 0,003, insbesondere < 0,002.

**23.** Kernkörper gemäß Anspruch 20 bis 22, **dadurch gekennzeichnet, dass** der Kernkörper ein Verhältnis von Kompressionsmodul zu Raumgewicht ≥ etwa $5{,}5\ \frac{\mathrm{MPa}}{\mathrm{kg/m^3}}$, bevorzugt ≥ etwa $5{,}8\ \frac{\mathrm{MPa}}{\mathrm{kg/m^3}}$ aufweist.

## Claims

**1.** Core body, wherein the following condition a) is fulfilled:

a) it has a density of ≤ approximately 48, in particular ≤ approximately 40, more preferably ≤ approximately 32 kg/m$^3$ and most preferably ≤ 26 kg/m$^3$;

and wherein condition b) is fulfilled:
b) it has a ratio of compression modulus to density of ≥ approximately

$4.5\ \frac{\mathrm{MPa}}{\mathrm{kg/m^3}}$, preferably $\geq 5.5\ \frac{\mathrm{MPa}}{\mathrm{kg/m^3}}$, particularly preferably $\geq 5.8\ \frac{\mathrm{MPa}}{\mathrm{kg/m^3}}$;

**2.** Core body according to claim 1, **characterised in that** the core body has a cell size of ≤ approximately 9.6 mm, in particular ≤ 6.4 mm and preferably ≤ 4.8 mm and particularly preferably ≤ 3.2 mm and most particularly preferably ≤ 1.6 mm.

**3.** Core body according to at least one of the preceding claims, **characterised in that** the core body is a honeycomb body, wherein the honeycomb body has a polygonal, preferably hexagonal, rectangular, or circular cell geometry.

**4.** Core body according to at least one of the preceding claims, **characterised in that** the core body is made of glass (E, S2) fibre, carbon fibre, Kevlar fibre, basalt fibre, preferably quartz glass fibre, or hybrid constructions of these fibres.

**5.** Core body according to at least one of the preceding claims, **characterised in that** the core body is a quartz glass fibre-plastic composite.

**6.** Core body according to at least one of the preceding claims, **characterised in that** the core body is made of a plastic comprising a thermosetting or thermoplastic matrix, preferably from the family of cyanate esters or polyimides, possibly also phenols, epoxides, benzoxazines, BMI, polyetherimides (PEI), polyetherketones (PEK, PEEK, PAEK, PEKK), polythioethers (PPS), and polyethers (PP, PPO).

**7.** Core body according to at least one of the preceding claims, **characterised in that** the core body is a composite consisting of fibres and/or other carrier or filler materials and a plastic comprising a thermosetting or thermoplastic matrix, preferably from the family of cyanate esters or polyimides, or possibly also phenols, epoxides, benzoxazines, BMI, polyetherimides (PEI), polyetherketones (PEK, PEEK, PAEK, PEKK), polythioethers (PPS), and polyethers (PP, PPO).

**8.** Core body according to at least one of the preceding claims, **characterised in that** the core body is made of a fabric and/or a fleece-like structure.

**9.** Core body according to claim 8, **characterised in that** the fabric is not completely impregnated and/or coated and ensures air permeability via the open-pored cell walls between the cells.

**10.** Core body according to at least one of the preceding claims, **characterised in that** the core body has a high temperature resistance of over 350°C.

**11.** Core body according to at least one of the preceding claims, **characterised in that** the core body has excellent dielectric properties with a dielectric constant ≤ 1.1, in particular ≤ 1.0, and a loss factor (Loss Tangent) of < 0.003, in particular < 0.002.

**12.** Core body according to at least one of the preceding claims, **characterised in that** the core body has a ratio of compressive strength to density of ≥ approximately $0.04\ \frac{\mathrm{MPa}}{\mathrm{kg/m^3}}$ preferably $\geq 0.06\ \frac{\mathrm{MPa}}{\mathrm{kg/m^3}}$.

**13.** Method for producing a core body from an open-pored carrier material, wherein the carrier material is a fabric and/or a fleece-like structure

i) A material web made of a carrier material is provided with adhesive strips in regular patterns by means of an application device;
ii) stacks of sections of the material web are formed, which lie on top of each other in such a way that they are offset relative to each other with respect to the strip patterns,

iia) that the strips of a lower section are each arranged between the strips of the respective upper section; or
iib) that the strips of a lower section are offset but not centred between the strips of the respective upper section;

iii) overlapping sections in the areas of the strips are glued together;
iv) the stack is expanded, wherein a honeycomb shape of any polygonal structure is formed, in particular a honeycomb shape with hexagonal, rectangular or circular cell geometry for the production of hexagonal, overexpanded, rectangular and 3D honeycomb cores;
v) the honeycomb shape is impregnated and/or coated with a synthetic resin, wherein the carrier in the form of the

honeycomb body is not completely impregnated and/or coated with resin and air permeability is ensured via the open-pored cell walls between the cells;

vi) the honeycomb shape coated with the synthetic resin is subjected to a curing step to cure the synthetic resin;

vii) the honeycomb shape thus formed is cut to form honeycomb bodies.

**14.** Method according to claim 13, **characterised in that** the open-pored carrier preferably, but not exclusively, consists of glass (E, S2, quartz) fibre, carbon fibre, Kevlar fibre, basalt fibre or hybrid fabrics of these fibres.

**15.** Method according to claim 14, **characterised in that** the carrier is partially pre-impregnated or coated with a resin to reduce the porosity prior to the expansion process, wherein after coating the porosity is less than 40% and the coating is in a weight ratio of 10-75% to the weight of the carrier, and the coated carrier is temperature-stable at 160-250°C after coating and, if necessary, curing, and is designed to be flexible in order to implement the reshaping of these pre-impregnated layers during the expansion process with low expansion forces.

**16.** Method according to one of claims 13 to 15, **characterised in that** the used adhesive is a thermosetting plastic, thermoplastic or elastomer, preferably but not exclusively a phenolic, epoxy, polyimide or cyanate ester adhesive.

**17.** Method according to at least one of claims 13 to 16, **characterised in that**, after the expansion step iv), the honeycomb shape is stabilised by thermal treatment.

**18.** Method according to at least one of claims 13 to 17, **characterised in that** a thermosetting or thermoplastic matrix system is used as a resin, preferably from the family of cyanate esters or polyimides, or possibly also phenols, epoxides, benzoxazines, BMI, polyetherimides (PEI), polyetherketones (PEK, PEEK, PAEK, PEKK), polythioethers (PPS) and polyethers (PP, PPO).

**19.** Method according to at least one of claims 13 to 18, **characterised in that** steps v) and vi) are repeated once or several times in order to apply one or more further layers of the synthetic resin.

**20.** Core body according to claim 1, manufactured according to the method according to at least one of claims 13 to 19.

**21.** Core body according to claim 20, **characterised in that** the open-pored carrier is not completely impregnated and/or coated and ensures air permeability via the open-pored cell walls between the cells.

**22.** Core body according to claims 20 and 21, **characterised in that** the core body has excellent dielectric properties with a dielectric constant ≤ 1.1, in particular ≤ 1.0, and a loss tangent of < 0.003, in particular < 0.002.

**23.** Core body according to claims 20 to 22, **characterised in that** the core body has a ratio of compression modulus to density of ≥ approximately $5.5\ \frac{\text{MPa}}{\text{kg/m}^3}$, preferably ≥ approximately $5.8\ \frac{\text{MPa}}{\text{kg/m}^3}$.

## Revendications

**1.** Ame, dans laquelle la condition suivante a) est remplie :

a) elle présente un poids volumique ≤ environ 48, en particulier ≤ environ 40, de manière plus préférée ≤ environ 32 kg/m$^3$ et de manière très particulièrement préférée ≤ 26 kg/m$^3$ ;

et dans laquelle la condition b) est remplie :

b) elle présente un rapport entre le module de compression et le poids volumique ≥ environ $4{,}5\ \frac{\text{MPa}}{\text{kg/m}^3}$, de manière préférée $\geq 5{,}5\ \frac{\text{MPa}}{\text{kg/m}^3}$, de manière particulièrement préférée $\geq 5{,}8\ \frac{\text{MPa}}{\text{kg/m}^3}$ ;

**2.** Ame selon la revendication 1, **caractérisée en ce que** l'âme présente une taille de cellule ≤ environ 9,6 mm, en particulier ≤ 6,4 mm et de manière préférée ≤ 4,8 mm et de manière particulièrement préférée ≤ 3,2 mm et de manière très particulièrement préférée ≤ 1,6 mm.

**3.** Ame selon au moins l'une quelconque des revendications précédentes, **caractérisée en ce que** l'âme est un corps alvéolé, dans laquelle le corps alvéolé présente une géométrie cellulaire polygonale, de préférence hexagonale, rectangulaire ou circulaire.

**4.** Ame selon au moins l'une quelconque des revendications précédentes, **caractérisée en ce que** l'âme est fabriquée à partir de fibre de verre (E-, S2), de carbone, de kevlar, de basalte, de manière préférée d'une fibre de verre de quartz, ou à partir de structures hybrides desdites fibres mentionnées.

**5.** Ame selon au moins l'une quelconque des revendications précédentes, **caractérisée en ce que** l'âme est un composite fibre de verre de quartz-de matière plastique.

**6.** Ame selon au moins l'une quelconque des revendications précédentes, **caractérisée en ce que** l'âme est fabriquée à partir d'une matière plastique qui comprend une matrice thermodurcissable ou également thermoplastique, de manière préférée de la famille des cyanatesters ou polyimides, le cas échéant également des phénols, époxydes, benzoxazines, IMC, polyétherimides (PEI), polyéthercétones (PEK, PEEK, PAEK, PEKK), polythioéthers (PPS), polyéthers (PP, PPO).

**7.** Ame selon au moins l'une quelconque des revendications précédentes, **caractérisée en ce que** l'âme est un composite constitué de fibres et/ou d'un autre matériau de support ou de remplissage et d'une matière plastique, qui comprend une matrice thermodurcissable ou également thermoplastique, de manière préférée de la famille des cyanatesters ou polyimides, le cas échéant également des phénols, époxydes, benzoxazines, IMC, polyétherimides (PEI), polyéthercétones (PEK, PEEK, PAEK, PEKK), polythioéthers (PPS), polyéthers (PP, PPO).

**8.** Ame selon au moins l'une quelconque des revendications précédentes, **caractérisée en ce que** l'âme est fabriquée à partir d'un tissu et/ou d'une structure non tissée.

**9.** Ame selon la revendication 8, **caractérisée en ce que** le tissu n'est pas entièrement imprégné et/ou enduit et assure une perméabilité à l'air par les parois cellulaires à pores ouverts entre les cellules.

**10.** Ame selon au moins l'une quelconque des revendications précédentes, **caractérisée en ce que** l'âme présente une résistance élevée à une température supérieure à 350 °C.

**11.** Ame selon au moins l'une quelconque des revendications précédentes, **caractérisée en ce que** l'âme présente d'excellentes propriétés diélectriques avec une constante diélectrique ≤ 1,1, en particulier ≤ 1,0 et un facteur de perte (Loss Tangent) < 0,003, en particulier < 0,002.

**12.** Ame selon au moins l'une quelconque des revendications précédentes, **caractérisée en ce que** l'âme présente un rapport entre la résistance à la compression et le poids volumique ≥ environ 0,04 de $\frac{\mathrm{MPa}}{\mathrm{kg/m^3}}\frac{\mathrm{MPa}}{\mathrm{kg/m^3}}$ manière préférée ≥ 0,06.

**13.** Procédé de fabrication d'une âme à partir d'un matériau de support à pores ouverts, dans lequel le matériau de support est un tissu et/ou une structure non tissée i) une bande de matériau composée d'un matériau de support est pourvue de bandes de colle selon des motifs réguliers au moyen d'un dispositif d'application ;

ii) des empilements sont formés de sections de la bande de matériau qui sont décalées les unes par rapport aux autres par rapport au motif de bande de telle manière

iia) que les bandes d'une section inférieure sont disposées respectivement entre les bandes de la section supérieure respective ; ou
iib) que les bandes d'une section inférieure sont décalées, mais pas centrées entre les bandes de la section supérieure respective ;

iii) des sections superposées sont collées entre elles dans les zones des bandes ;
iv) l'empilement est dilaté, dans lequel une forme alvéolaire se forme quelle que soit la structure polygonale, en particulier une forme alvéolaire de géométrie cellulaire hexagonale, rectangulaire ou circulaire pour la fabrication d'âmes alvéolaires hexagonales, surdilatées, rectangulaires et 3D ;

v) la forme alvéolaire est imprégnée et/ou revêtue d'une résine synthétique, dans lequel le support en forme de corps alvéolaire n'est pas entièrement imprégné et/ou revêtu d'une résine et assure une perméabilité à l'air par les parois cellulaires à pores ouverts entre les cellules ;
vi) le moule alvéolaire revêtu de la résine synthétique est soumis à une étape de durcissement pour durcir la résine synthétique ;
vii) la forme alvéolaire ainsi formée est découpée en formant des corps alvéolaires.

**14.** Procédé selon la revendication 13, **caractérisé en ce que** le support à pores ouverts est constitué de manière préférée, mais pas exclusivement de tissus en verre (E, S2, quartz), en carbone, en kevlar, en fibres de basalte ou hybrides de ladite fibre.

**15.** Procédé selon la revendication 14, **caractérisé en ce que** le support est partiellement pré-imprégné ou revêtu d'une résine pour réduire la porosité avant le processus d'expansion, dans lequel après le revêtement, la porosité est inférieure à 40 % et le revêtement est dans un rapport pondéral de 10 à 75 % par rapport au poids du support et le support revêtu après le revêtement et, le cas échéant, le durcissement est stable à la température à 160-250 °C et est configuré de manière flexible pour mettre en œuvre la mise en forme desdites couches pré-imprégnées lors du processus d'expansion avec de faibles forces d'expansion.

**16.** Procédé selon l'une quelconque des revendications 13 à 15, **caractérisé en ce qu'**une colle thermodurcissable, thermoplastique ou encore élastomère est utilisée de préférence mais pas exclusivement une colle à base de phénol, d'époxy, de polyimide, d'ester de cyanate.

**17.** Procédé selon au moins l'une quelconque des revendications 13 à 16, **caractérisé en ce qu'**après l'étape d'expansion iv), une stabilisation de la forme alvéolaire est effectuée par traitement thermique.

**18.** Procédé selon au moins l'une quelconque des revendications 13 à 17, **caractérisé en ce qu'**un système matriciel thermodurcissable ou thermoplastique est utilisé comme résine, de manière préférée de la famille des cyanatesters ou polyimides, le cas échéant également des phénols, époxydes, benzoxazines, IMC, polyétherimides (PEI), polyéthercétones (PEK, PEEK, PAEK, PEKK), polythioéthers (PPS), polyéthers (PP, PPO).

**19.** Procédé selon au moins l'une quelconque des revendications 13 à 18, **caractérisé en ce que** les étapes v) et vi) sont répétées une ou plusieurs fois pour appliquer une ou plusieurs couches supplémentaires de la résine synthétique.

**20.** Ame selon la revendication 1, fabriquée selon le procédé selon au moins l'une quelconque des revendications 13 à 19.

**21.** Ame selon la revendication 20, **caractérisée en ce que** le support à pores ouverts n'est pas entièrement imprégné et/ou revêtu et assure une perméabilité à l'air par les parois cellulaires à pores ouverts entre les cellules.

**22.** Ame selon les revendications 20 et 21, **caractérisée en ce que** l'âme présente d'excellentes propriétés diélectriques avec une constante diélectrique ≤ 1,1, en particulier ≤ 1,0 et un facteur de perte (Loss Tangent) < 0,003, en particulier < 0,002.

**23.** Ame selon la revendication 20 à 22, **caractérisée en ce que** l'âme présente un rapport entre le module de compression et le poids volumique ≥ environ $5,5 \frac{\mathrm{MPa}}{\mathrm{kg/m^3}}$ de manière préférée $\geq \frac{\mathrm{MPa}}{\mathrm{kg/m^3}}$ environ 5,8.

Figur 1

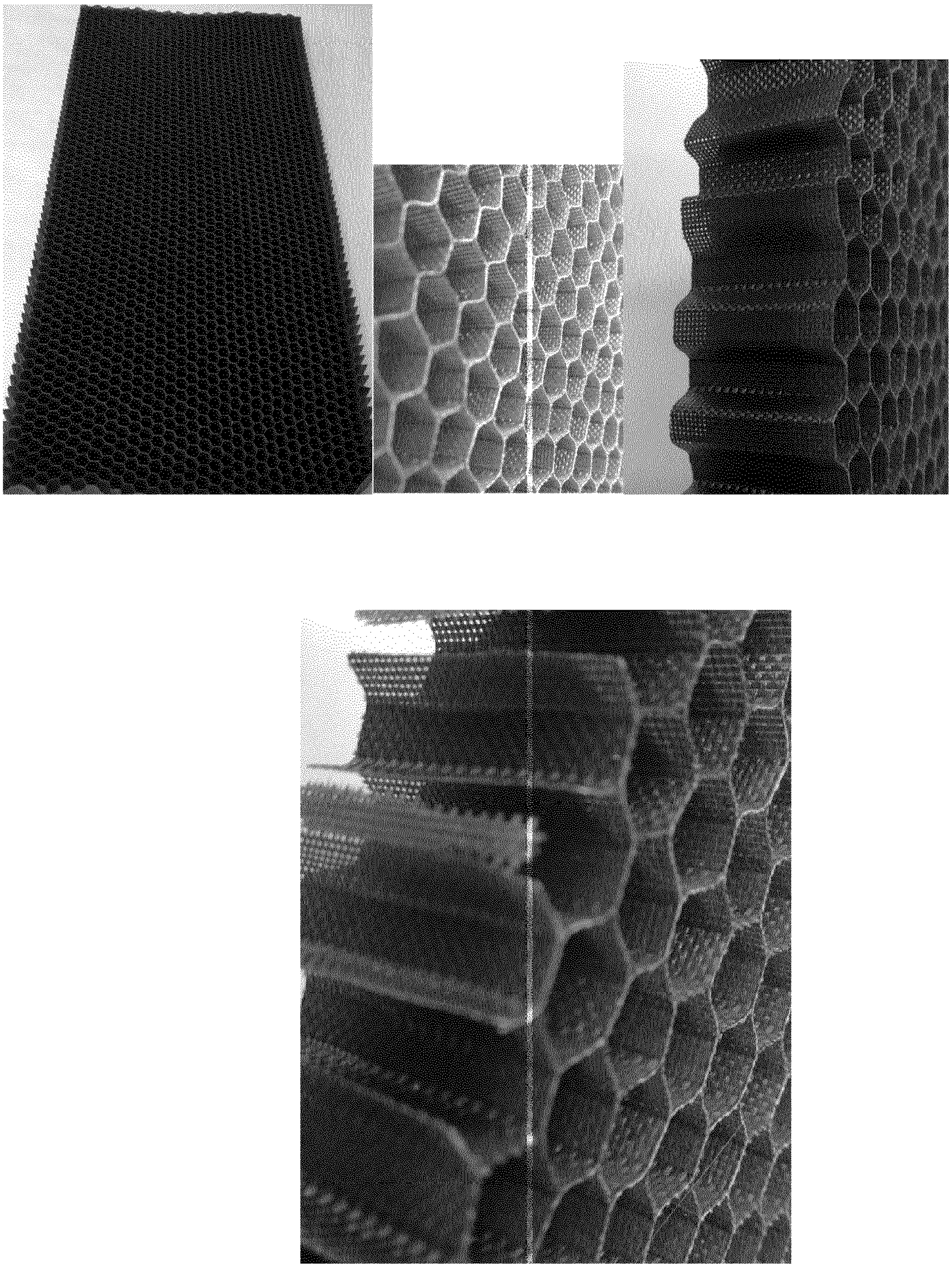

Figur 2

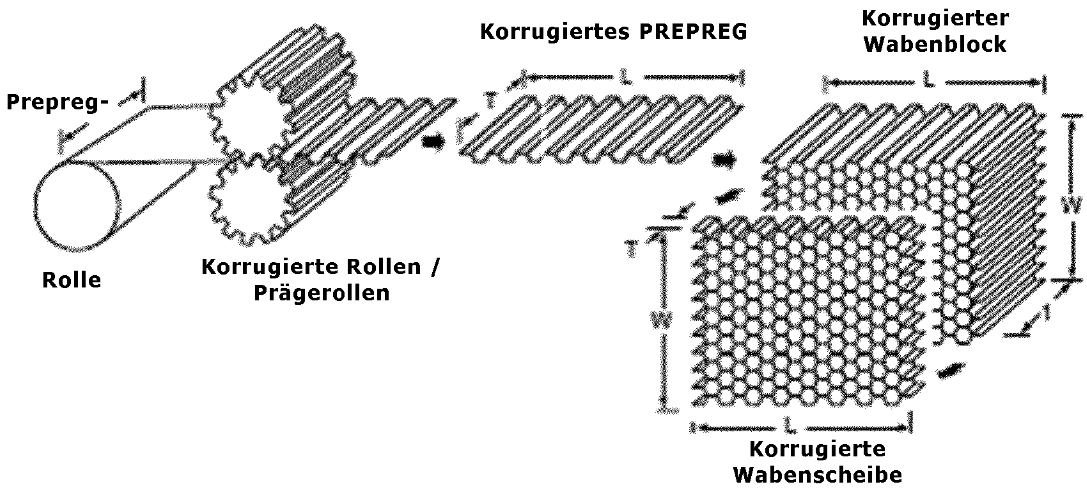
Prepreg-
Rolle
Korrugierte Rollen /
Prägerollen
Korrugiertes PREPREG
T
L
Korrugierter
Wabenblock
L
W
T
T
W
L
Korrugierte
Wabenscheibe

Figur 3

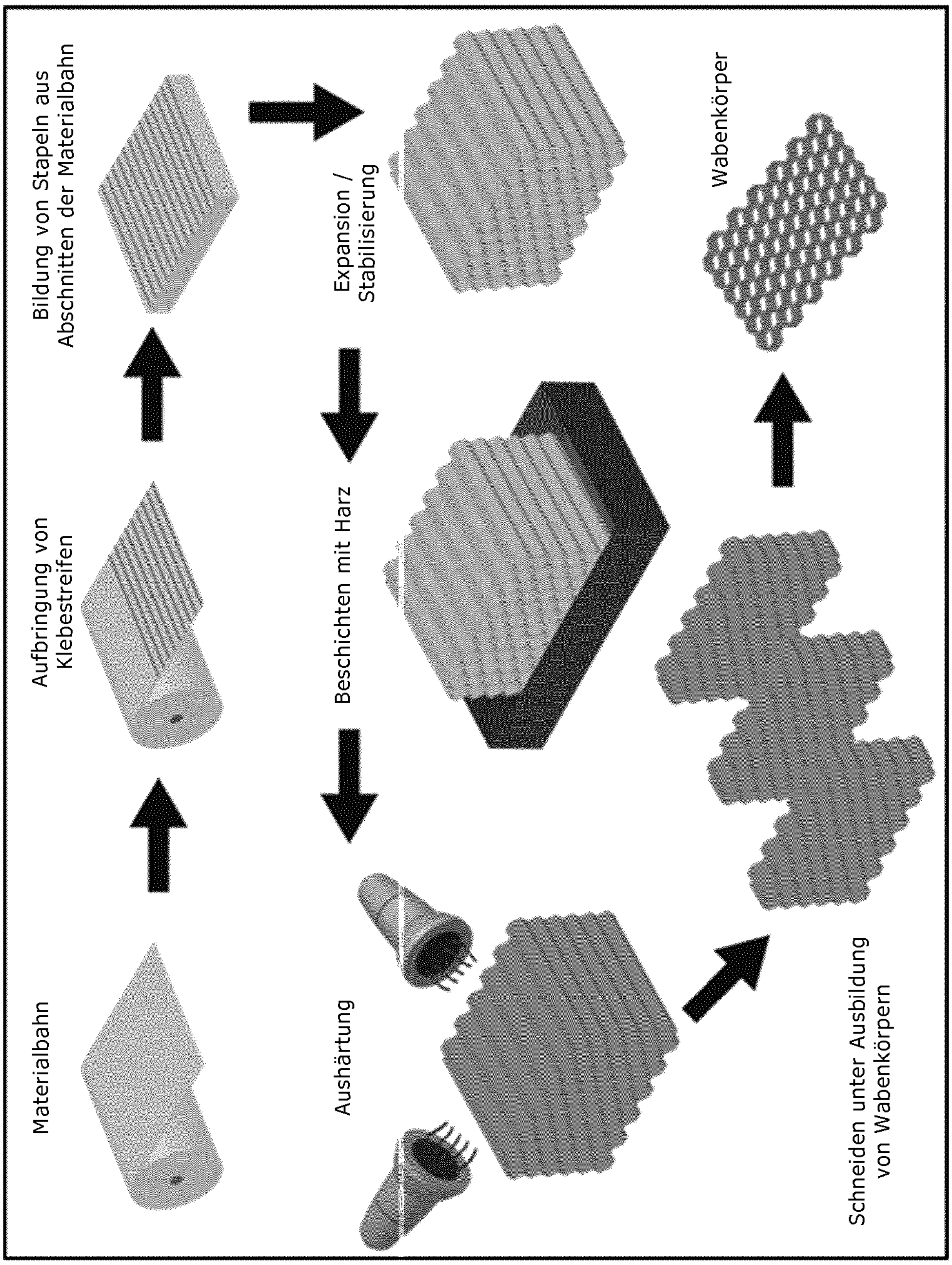
Materialbahn
Aufbringung von Klebestreifen
Bildung von Stapeln aus Abschnitten der Materialbahn
Expansion / Stabilisierung
Beschichten mit Harz
Aushärtung
Schneiden unter Ausbildung von Wabenkörpern
Wabenkörper

Figur 4

| Zusammenfassung Mittelwerte bezogen auf die Cyanatesterwabe | | | |
|---|---|---|---|
| **Wabeneigenschaften** | Einheiten | Wabentype | |
| | | | |
| **Unstabilisierte Druckfestigkeit bei RT nach ASTM-C-365** | N/mm2 | ECG-CEQ-P 6.4-32 | 1,25 |
| | N/mm2 | Stand der Technik bei einem Raumgewicht von 48kg/m$^3$ | 1,6 |
| **Unstabilisiertes Druckmodul bei RT nach ASTM-C-365** | N/mm2 | ECG-CEQ-P 6.4-32 | 275 |
| | N/mm2 | Stand der Technik bei einem Raumgewicht von 48kg/m$^3$ | 190 |
| | | | |

Figur 5

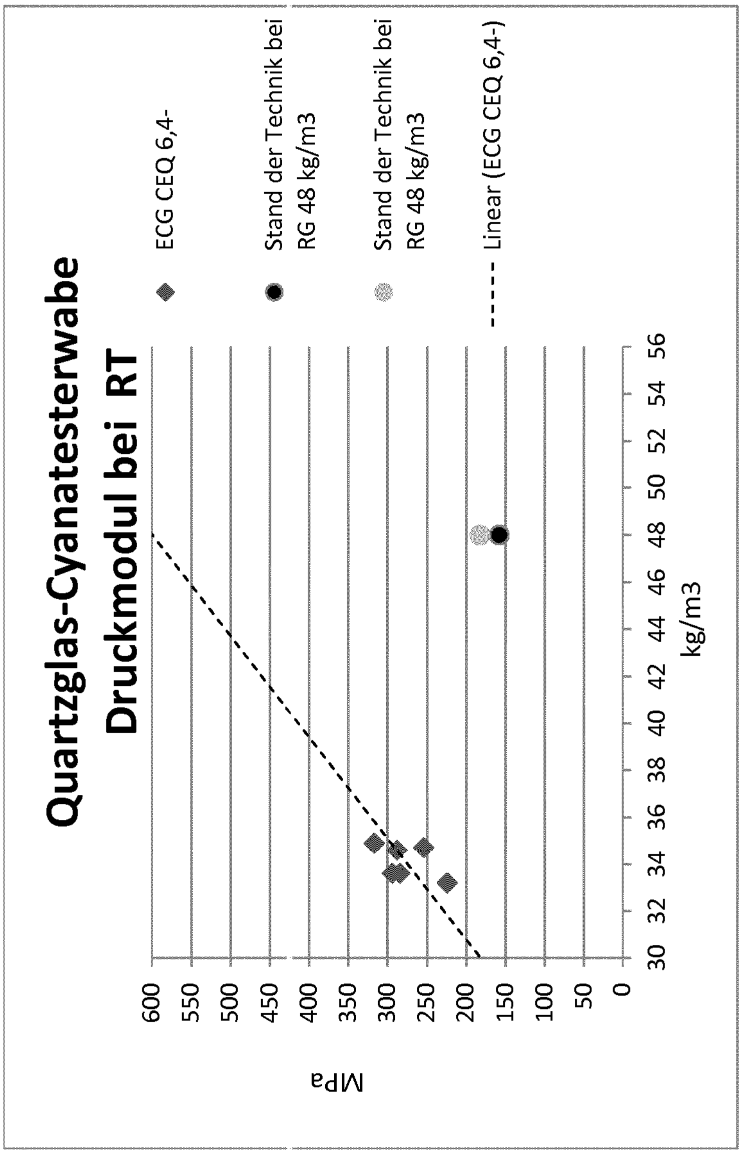
Quartzglas-Cyanatesterwabe
Druckmodul bei RT
MPa
600
550
500
450
400
350
300
250
200
150
100
50
0
30
32
34
36
38
40
42
44
46
48
50
52
54
56
kg/m3
ECG CEQ 6,4-
Stand der Technik bei RG 48 kg/m3
Stand der Technik bei RG 48 kg/m3
Linear (ECG CEQ 6,4-)

Figur 6

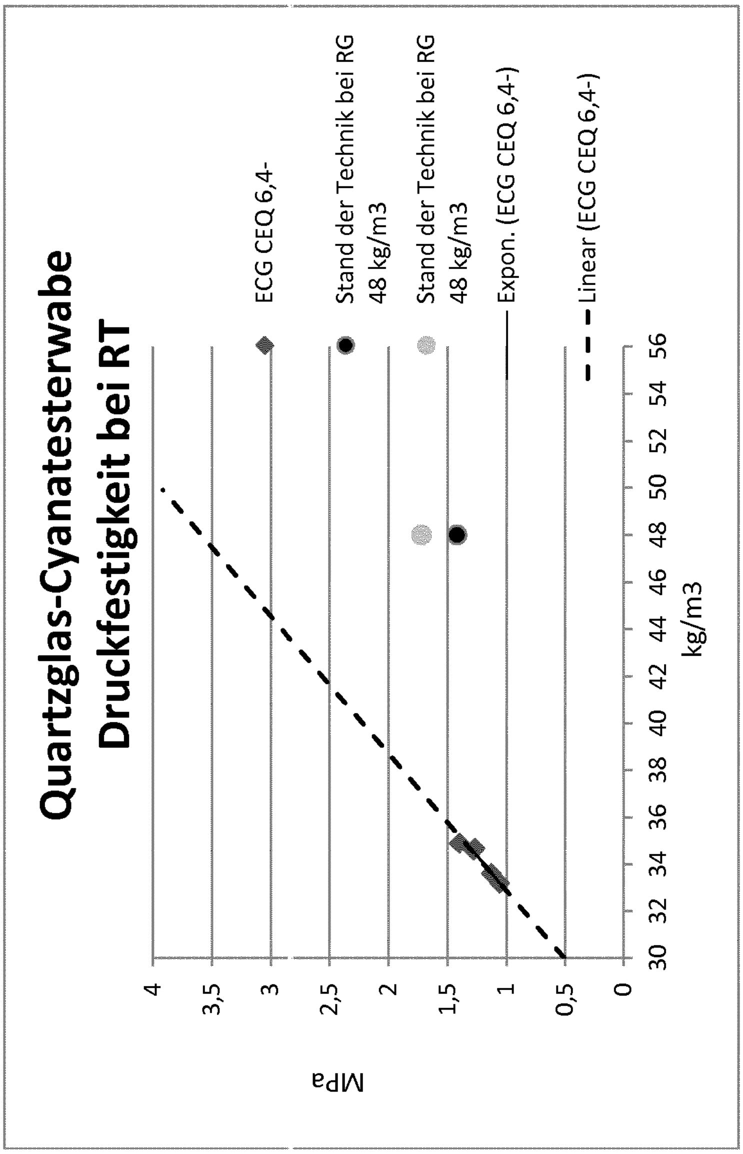
Quartzglas-Cyanatesterwabe
Druckfestigkeit bei RT
MPa
4
3,5
3
2,5
2
1,5
1
0,5
0
30
32
34
36
38
40
42
44
46
48
50
52
54
56
kg/m3
ECG CEQ 6,4-
Stand der Technik bei RG 48 kg/m3
Stand der Technik bei RG 48 kg/m3
Expon. (ECG CEQ 6,4-)
Linear (ECG CEQ 6,4-)

Figur 7

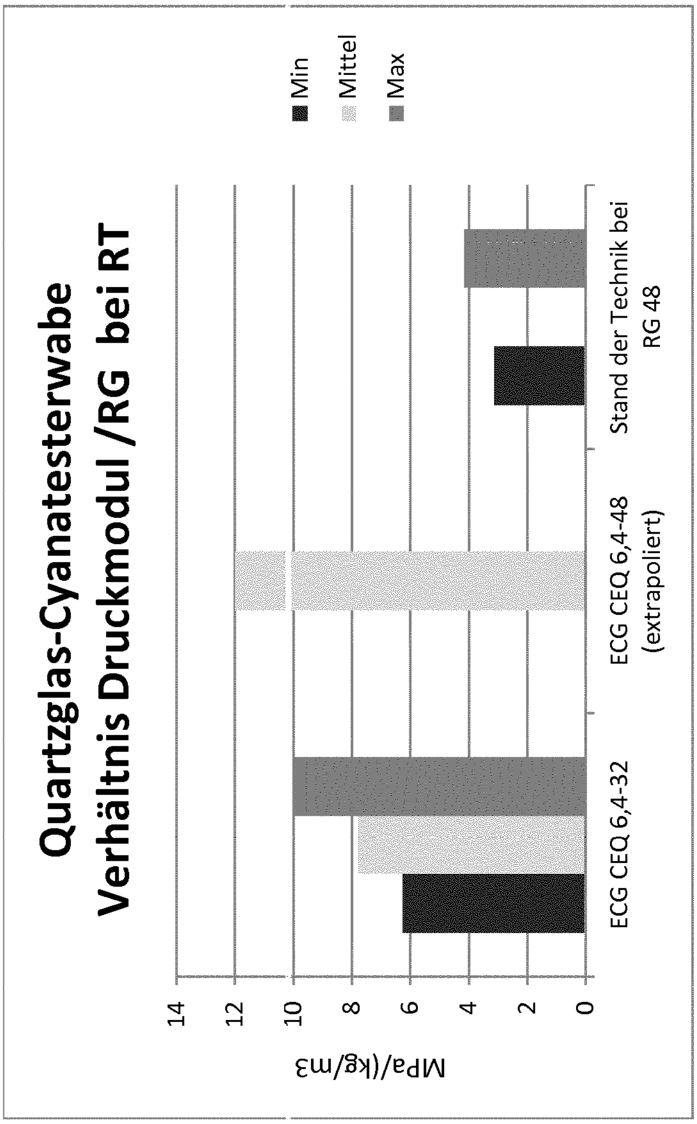
Quartzglas-Cyanatesterwabe
Verhältnis Druckmodul /RG bei RT
MPa/(kg/m3
14
12
10
8
6
4
2
0
ECG CEQ 6,4-32
ECG CEQ 6,4-48
(extrapoliert)
Stand der Technik bei
RG 48
Min
Mittel
Max

Figur 8

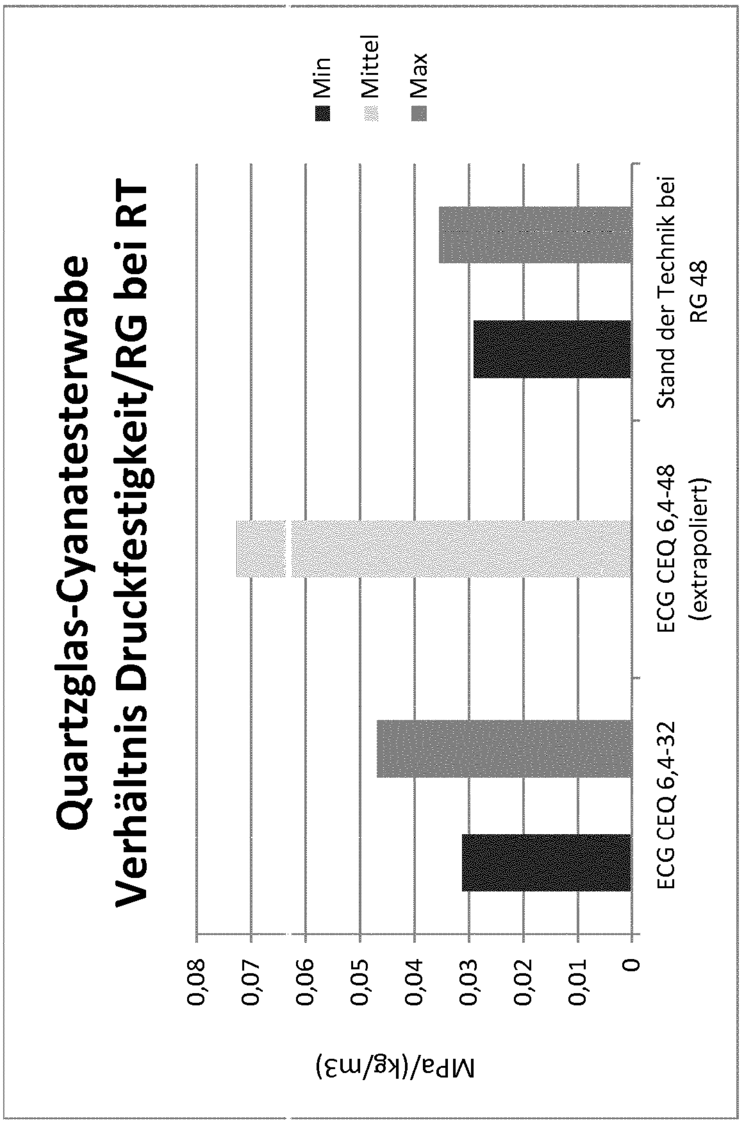
Quartzglas-Cyanatesterwabe
Verhältnis Druckfestigkeit/RG bei RT
MPa/(kg/m3)
0,08
0,07
0,06
0,05
0,04
0,03
0,02
0,01
0
ECG CEQ 6,4-32
ECG CEQ 6,4-48 (extrapoliert)
Stand der Technik bei RG 48
Min
Mittel
Max

Figur 9

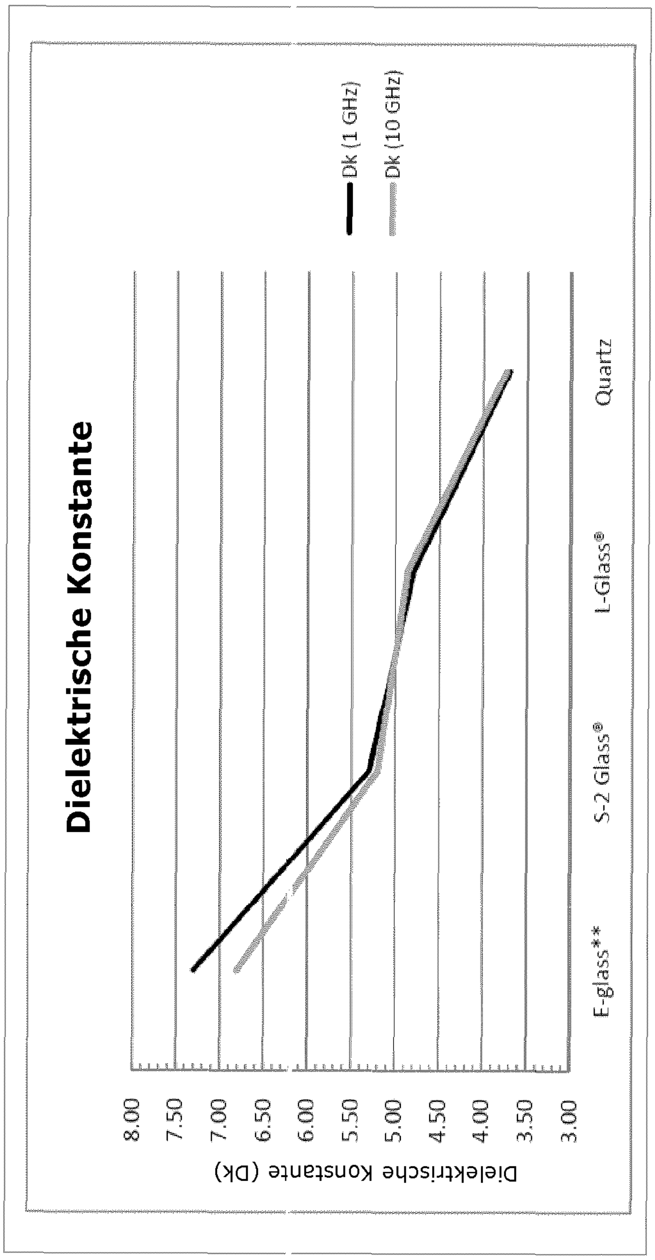
Dielektrische Konstante
Dielektrische Konstante (Dk)
8.00
7.50
7.00
6.50
6.00
5.50
5.00
4.50
4.00
3.50
3.00
E-glass**
S-2 Glass®
L-Glass®
Quartz
Dk (1 GHz)
Dk (10 GHz)

Figur 10

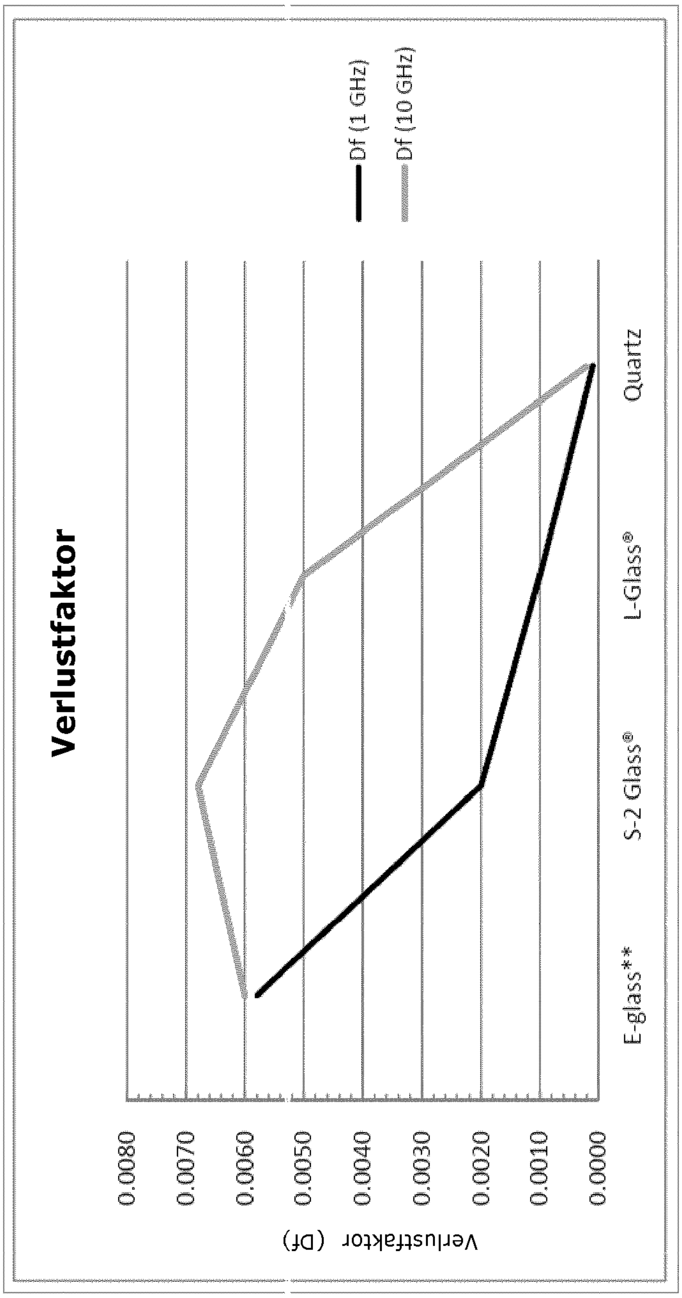
Verlustfaktor
Verlustfaktor (Df)
0.0080
0.0070
0.0060
0.0050
0.0040
0.0030
0.0020
0.0010
0.0000
E-glass**
S-2 Glass®
L-Glass®
Quartz
Df (1 GHz)
Df (10 GHz)

Figur 11

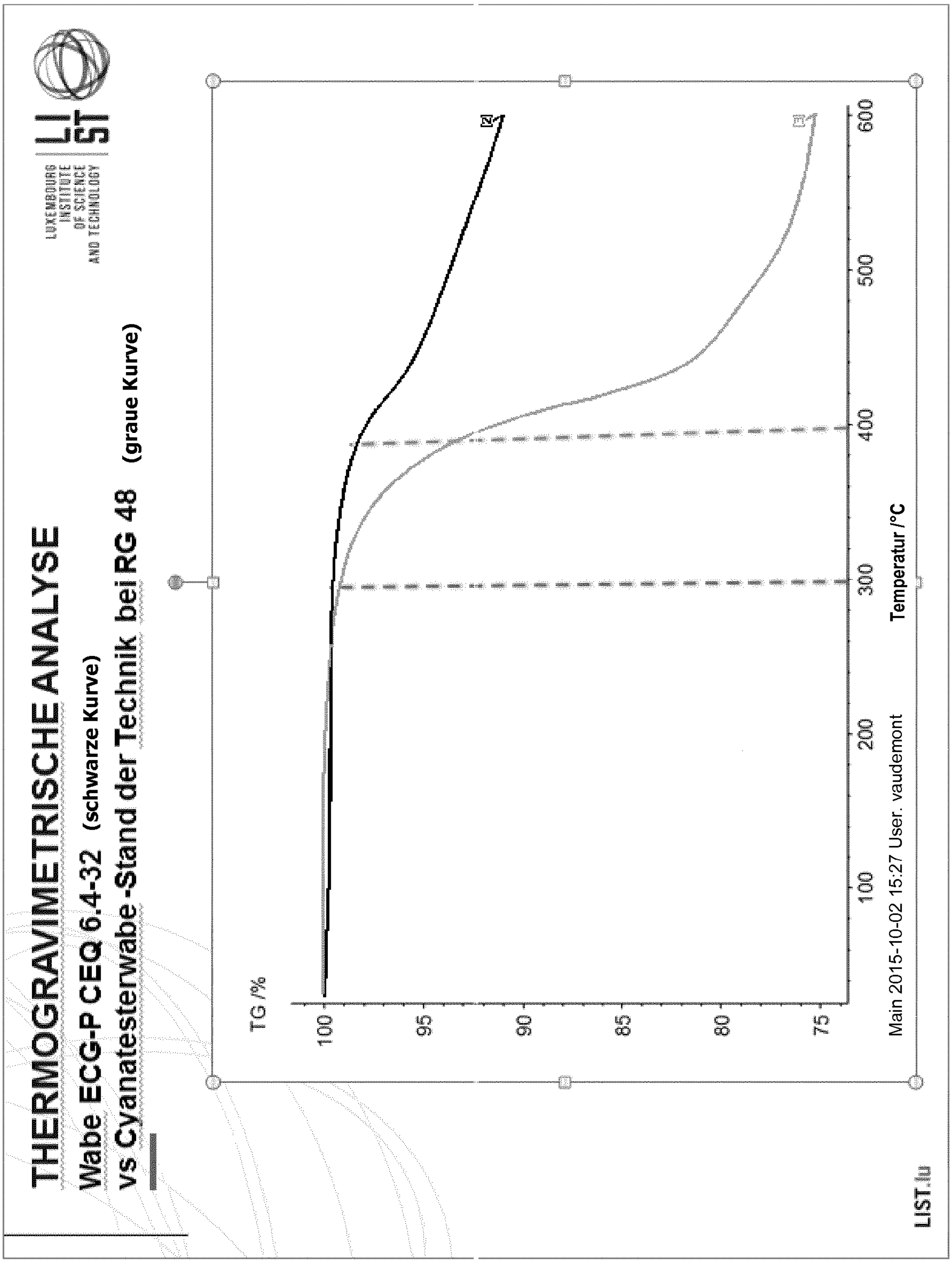
THERMOGRAVIMETRISCHE ANALYSE
Wabe ECG-P CEQ 6.4-32 (schwarze Kurve)
vs Cyanatesterwabe -Stand der Technik bei RG 48 (graue Kurve)
LUXEMBOURG INSTITUTE OF SCIENCE AND TECHNOLOGY
TG /%
100
95
90
85
80
75
100
200
300
400
500
600
Temperatur /°C
Main 2015-10-02 15:27 User: vaudemont
LIST.lu

Figur 12

| Zusammenfassung Mittelwerte bezogen auf die Cyanatesterwabe | | | | |
|---|---|---|---|---|
| **Wabeneigenschaften** | Einheiten | | | |
| **Ausgasungstest nach ECSS-Q-ST-70-02C** | | | | |
| | % | ECG CEQ-P 6.4-36 | gemessen | gefordert |
| | | | TML | |
| | | | *0.636* | <1 |
| | | | RML | |
| | | | *0.087* | <1 |
| | | | CVCN | |
| | | | *0.000* | <0.1 |
| | | | | |
| | | | | |
| | | | | |
| **Thermogravimetrische Analyse (TGA),** | °C | ECG-CE-Q-P 6.4-32 | ± 400°C | |
| | °C | Stand der Technik bei einem Raumgewicht von 48 kg/$m^3$ | ± 300°C | |

Figur 13

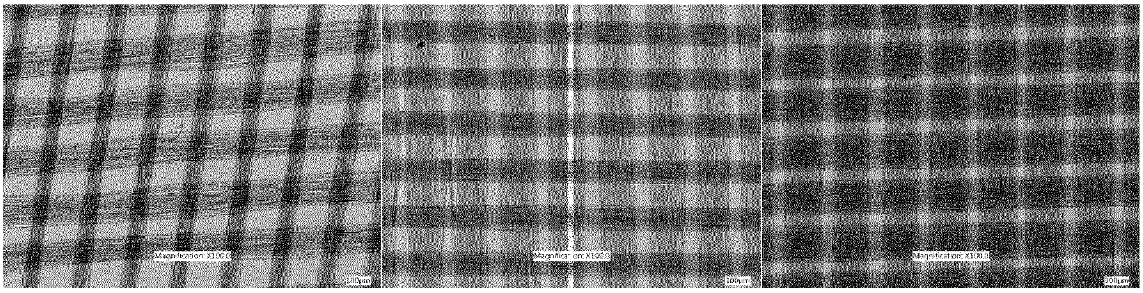


Figur 14

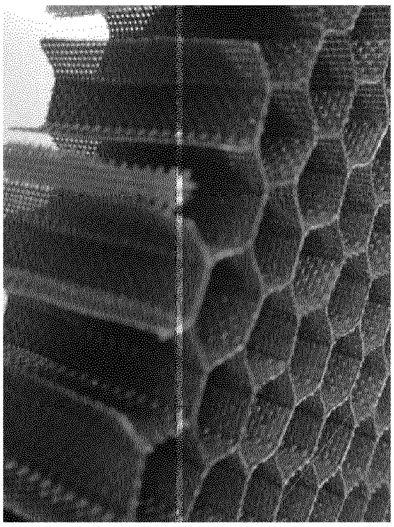

Fig 15

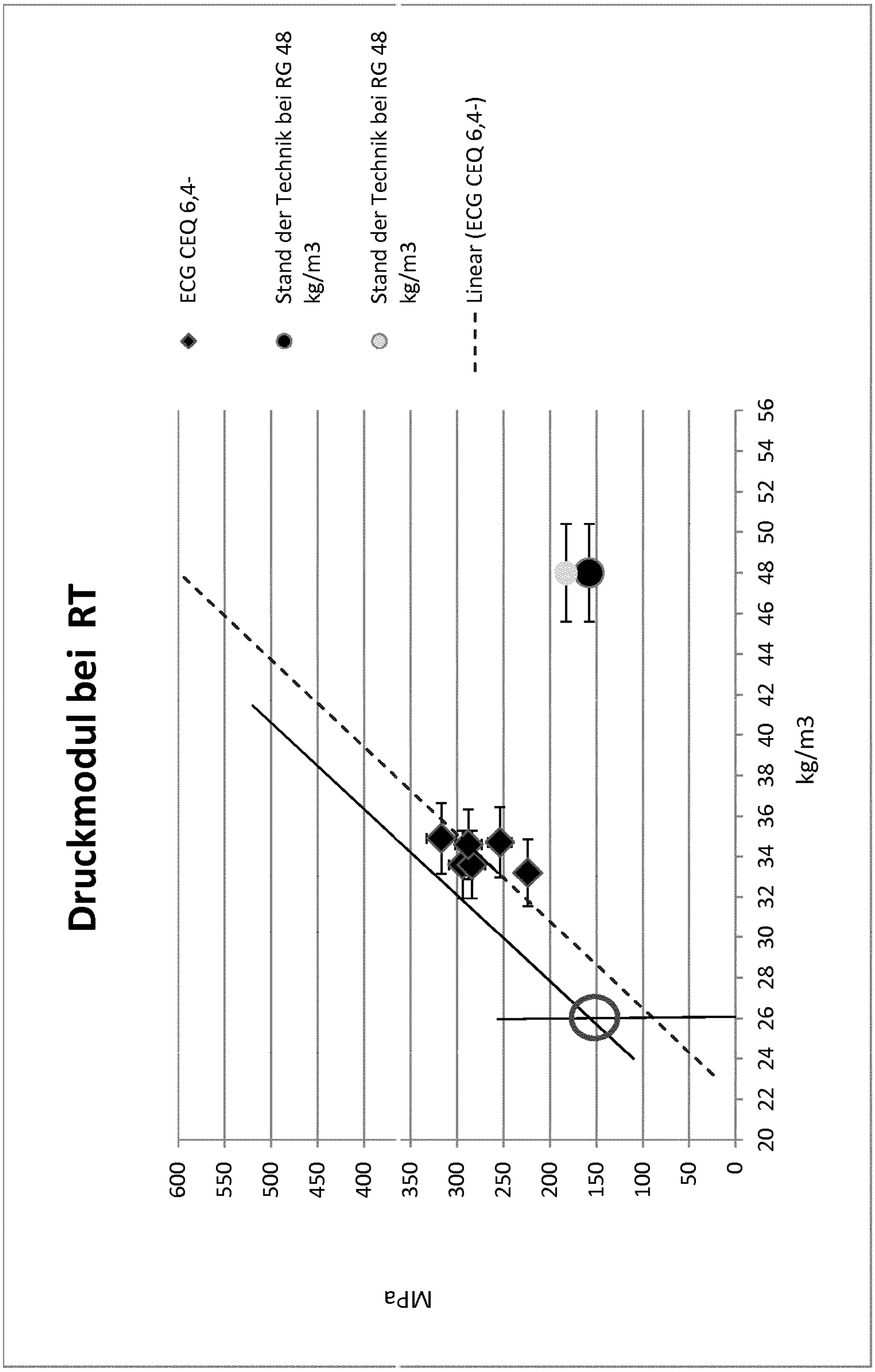
Druckmodul bei RT
MPa
600
550
500
450
400
350
300
250
200
150
100
50
0
20
22
24
26
28
30
32
34
36
38
40
42
44
46
48
50
52
54
56
kg/m3
ECG CEQ 6,4-
Stand der Technik bei RG 48 kg/m3
Stand der Technik bei RG 48 kg/m3
Linear (ECG CEQ 6,4-)

Fig 16

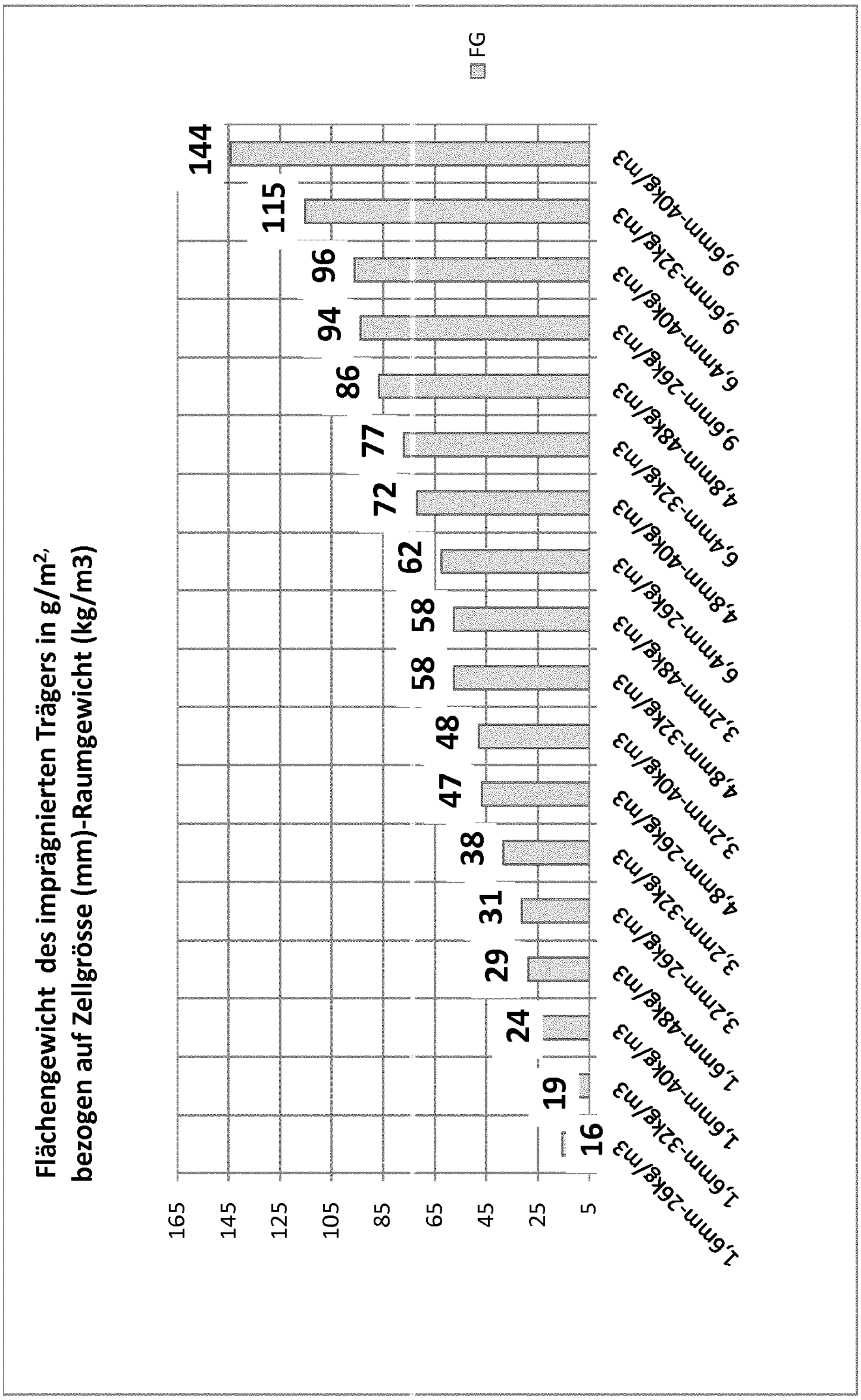
Flächengewicht des imprägnierten Trägers in g/m², bezogen auf Zellgrösse (mm)-Raumgewicht (kg/m3)
FG
165
145
125
105
85
65
45
25
5
16
19
24
29
31
38
47
48
58
58
62
72
77
86
94
96
115
144
1,6mm-26kg/m3
1,6mm-32kg/m3
1,6mm-40kg/m3
1,6mm-48kg/m3
3,2mm-26kg/m3
3,2mm-32kg/m3
4,8mm-26kg/m3
3,2mm-40kg/m3
4,8mm-32kg/m3
3,2mm-48kg/m3
6,4mm-26kg/m3
4,8mm-40kg/m3
6,4mm-32kg/m3
4,8mm-48kg/m3
9,6mm-26kg/m3
6,4mm-40kg/m3
9,6mm-32kg/m3
9,6mm-40kg/m3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5030305 A
- JP H07156318 A
- WO 9102646 A1
- EP 0739707 A1
- US 2008145599 A1


### In der Beschreibung aufgeführte Nicht-Patentliteratur


- **TOM BITZER**. Honeycomb Technology Materials, design, manufacturing, applications and testing. Chapman & Hall